(19)

**Europäisches Patentamt**
**European Patent Office**
**Office européen des brevets**

(11) **EP 3 151 376 A1**

(12) **EUROPEAN PATENT APPLICATION**
published in accordance with Art. 153(4) EPC

(43) Date of publication:
**05.04.2017 Bulletin 2017/14**

(21) Application number: **14892722.1**

(22) Date of filing: **20.05.2014**

(51) Int Cl.:
*H02J 50/00* (2016.01)     *H02J 7/00* (2006.01)

(86) International application number:
**PCT/JP2014/063323**

(87) International publication number:
**WO 2015/177860 (26.11.2015 Gazette 2015/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventor: **UCHIDA, Akiyoshi**
**Kawasaki-shi**
**Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

(54) **WIRELESS POWER TRANSMISSION CONTROL METHOD AND WIRELESS POWER TRANSMISSION SYSTEM**

(57)     A wireless power transfer control method for a system including a plurality of power source coils and a plurality of power receivers and simultaneously, wirelessly transfers power from the plurality of power source coils to at least two of the power receivers using one of magnetic field resonance and electric field resonance. The wireless power transfer control method includes obtaining a single-body power transfer efficiency of a plurality of power source coils to each of power receivers, and a single-body power requirement required by each of the power receivers; dividing the single-body power requirement by the single-body power transfer efficiency to calculate a single-body transferred power of each of the power receivers; selecting a first power receiver having a maximum single-body transferred power at which the single-body transferred power is maximum; and controlling the plurality of power source coils to maximize a power transfer efficiency to the first power receiver.

FIG. 14A

[POWER SOURCE]                    [POWER RECEIVER]

ST8 → INPUT POWER SUPPLY TRIGGER IN

ST1 → RECEIVE TRIGGER IN ← COMMUNICATE POWER SUPPLY TRIGGER IN TO POWER SOURCE — ST9

ST2 → SEARCH POWER RECEIVER

ST3 → CONFIRM POWER RECEIVER INFORMATION 1 ← SEND RESPONSE (COMMUNICATE INFORMATION 1) TO POWER SOURCE — ST10

CALCULATE SINGLE-BODY EFFICIENCY $\eta i$ OF EACH POWER RECEIVER $Ri$ USING INFORMATION 1 — ST4

CALCULATE SINGLE-BODY TRANSFERRED POWER $PTi$ FROM SINGLE-BODY EFFICIENCY $\eta i$ AND POWER REQUIREMENT $PRi$ OF EACH POWER RECEIVER $Ri$ — ST5

SELECT POWER RECEIVER $Rix$ HAVING MAXIMUM SINGLE-BODY TRANSFERRED POWER $PTix$ — ST6

COMPARE MAXIMUM SINGLE-BODY TRANSFERRED POWER $PTix$ AND EACH VALUE OF $PTi$ WITH EACH OTHER TO SELECT $Ri$ WHICH SATISFIES $PTix \cdot \alpha \leq PTi$ — ST7

AA

EP 3 151 376 A1

## Description

## TECHNICAL FIELD

Embodiments discussed herein relate to a wireless power transfer control method and a wireless power transfer system.

## BACKGROUND ART

In recent years, in order to perform power supply or perform charging, wireless power transfer techniques have been gaining attention. Research and development are being conducted regarding a wireless power transfer system wirelessly performing power transfer to various electronic apparatuses such as mobile terminals and notebook computers and household electrical appliances or to power infrastructure equipment.

When wireless power transfer is used, standardization is preferably performed so that power sources which transmit power and power receivers which receive the power transmitted from the power sources are used without trouble even when they are products manufactured by different manufacturers.

Conventionally, techniques using electromagnetic induction, and techniques using radio waves are generally known as wireless power transfer techniques.

Recently, wireless power transfer techniques using strong coupling resonance have been attracting attention as techniques being capable of transferring power to a plurality of power receivers while placing each power receiver at a certain distance from a power source, or to various three-dimensional positions of each power receiver.

Wireless power transfer techniques using magnetic field resonance or electric field resonance, for example, are known as this kind of wireless power transfer using strong coupling resonance.

A variety of wireless power transfer techniques have conventionally been proposed.

## PRIOR ART DOCUMENTS

## PATENT DOCUMENT

Patent Document 1: Japanese Laid-open Patent Publication No. 2005-110399
Patent Document 2: Japanese Laid-open Patent Publication No. 2012-034454
Patent Document 3: Japanese Laid-open Patent Publication No. 2013-034367
Patent Document 4: International Publication No. WO 2013/035873 pamphlet

## NON-PATENT DOCUMENT

Non-Patent Document 1: UCHIDA Akiyoshi, et al., "Phase and Intensity Control of Multiple Coil Currents in Resonant Magnetic Coupling," IMWS-IWPT2012, THU-C-1, pp. 53 - 56, May 10 - 11, 2012
Non-Patent Document 2: ISHIZAKI Toshio, et al., "3-D Free-Access WPT System for Charging Movable Terminals," IMWS-IWPT2012, FRI-H-1, pp. 219 - 222, May 10 - 11, 2012

## SUMMARY OF THE INVENTION

## PROBLEM TO BE SOLVED BY THE INVENTION

Conventionally, in order to perform power supply or perform charging, wireless power transfer techniques for wirelessly transferring power have been gaining attention, and a variety of methods are being researched and developed, as described earlier.

In other words, a variety of methods are being researched and developed as wireless power transfer control methods, each of which includes a plurality of power sources (power supply coils) and a plurality of power receivers and wirelessly transfers power from the plurality of power supply coils to the respective power receivers using magnetic field resonance or electric field resonance.

A method for transferring power to only a specific power receiver on the basis of the power transfer efficiency of each power receiver, and a method for controlling a plurality of power sources to change the direction of a magnetic field or an electric field and transfer power to power receivers, for example, have been proposed.

A method has also been proposed for, in at least two power receivers which receive power, reducing the power received by at least one power receiver while keeping a given overall power transfer efficiency and transferring power to these at least two power receivers.

Unfortunately, since power from a plurality of power supply coils to respective power receivers is influenced by various factors such as the magnitude of power required by each power receiver or the position and direction of each power receiver, the power transfer efficiency of the wireless power transfer system is insufficient.

## MEANS FOR SOLVING THE PROBLEM

According to an aspect of the embodiments, there is provided a wireless power transfer control method for a system including a plurality of power source coils and a plurality of power receivers and simultaneously, wirelessly transfers power from the plurality of power source coils to at least two of the power receivers using one of magnetic field resonance and electric field resonance.

First, a single-body power transfer efficiency of the plurality of power source coils to each of the power receivers, and a single-body power requirement required by each of the power receivers are obtained, and then the single-body power requirement is divided by the single-body power transfer efficiency to calculate a single-body transferred power of each of the power receivers. A first power receiver having a maximum single-body transferred power at which the single-body transferred power is maximum is selected, and the plurality of power source coils are controlled to maximize a power transfer efficiency to the first power receiver.

EFFECT OF THE INVENTION

The wireless power transfer control method and the wireless power transfer system disclosed include an advantageous effect in that the power transfer efficiency of the entire system may be improved.

BRIEF DESCRIPTION OF DRAWINGS

[FIG. 1A] FIG. 1A is a diagram schematically depicting one example of a wired power transfer system.
[FIG. 1B] FIG. 1B is a diagram schematically depicting one example of a wireless power transfer system.
[FIG. 2A] FIG. 2A is a diagram schematically depicting one example of a two-dimensional wireless power transfer system.
[FIG. 2B] FIG. 2B is a diagram schematically depicting one example of a three-dimensional wireless power transfer system.
[FIG. 3] FIG. 3 is a block diagram schematically depicting one example of a wireless power transfer system.
[FIG. 4A] FIG. 4A is a diagram (1) for illustrating a modified example of a transmission coil in the wireless power transfer system of FIG. 3.
[FIG. 4B] FIG. 4B is a diagram (2) for illustrating a modified example of the transmission coil in the wireless power transfer system of FIG. 3.
[FIG. 4C] FIG. 4C is a diagram (3) for illustrating a modified example of the transmission coil in the wireless power transfer system of FIG. 3.
[FIG. 5A] FIG. 5A is a circuit diagram (1) depicting an example of an independent resonance coil.
[FIG. 5B] FIG. 5B is a circuit diagram (2) depicting an example of the independent resonance coil.
[FIG. 5C] FIG. 5C is a circuit diagram (3) depicting an example of the independent resonance coil.
[FIG. 5D] FIG. 5D is a circuit diagram (4) depicting an example of the independent resonance coil.
[FIG. 6A] FIG. 6A is a circuit diagram (1) depicting an example of a resonance coil connected to a load or a power supply.
[FIG. 6B] FIG. 6B is a circuit diagram (2) depicting an example of the resonance coil connected to the load or the power supply.
[FIG. 6C] FIG. 6C is a circuit diagram (3) depicting an example of the resonance coil connected to the load or the power supply.
[FIG. 6D] FIG. 6D is a circuit diagram (4) depicting an example of the resonance coil connected to the load or the power supply.
[FIG. 7A] FIG. 7A is a diagram (1) for illustrating an example of controlling a magnetic field by a plurality of power sources.
[FIG. 7B] FIG. 7B is a diagram (2) for illustrating an example of controlling a magnetic field by the plurality of power sources.
[FIG. 7C] FIG. 7C is a diagram (3) for illustrating an example of controlling a magnetic field by the plurality of power sources.
[FIG. 8A] FIG. 8A is a diagram (1) for illustrating one example of a two-dimensional wireless power transfer control method for a plurality of power receivers.
[FIG. 8B] FIG. 8B is a diagram (2) for illustrating one example of the two-dimensional wireless power transfer control method for the plurality of power receivers.
[FIG. 8C] FIG. 8C is a diagram (3) for illustrating one example of the two-dimensional wireless power transfer control method for the plurality of power receivers.
[FIG. 9A] FIG. 9A is a diagram for illustrating one example of a three-dimensional wireless power transfer control method for a plurality of power receivers.
[FIG. 9B] FIG. 9B is a diagram for illustrating another example of a three-dimensional wireless power transfer control method for a plurality of power receivers.
[FIG. 10A] FIG. 10A is a diagram (1) for illustrating an example of first processing in the wireless power transfer control method of the present embodiment.
[FIG. 10B] FIG. 10B is a diagram (2) for illustrating an example of the first processing in the wireless power transfer control method of the present embodiment.
[FIG. 10C] FIG. 10C is a diagram (3) for illustrating an example of the first processing in the wireless power transfer control method of the present embodiment.
[FIG. 10D] FIG. 10D is a diagram (4) for illustrating an example of the first processing in the wireless power transfer control method of the present embodiment.
[FIG. 10E] FIG. 10E is a diagram (5) for illustrating an example of the first processing in the wireless power transfer control method of the present embodiment.
[FIG. 11A] FIG. 11A is a diagram (1) for illustrating an example of second processing in the wireless power transfer control method of the present embodiment.

[FIG. 11B] FIG. 11B is a diagram (2) for illustrating an example of the second processing in the wireless power transfer control method of the present embodiment.

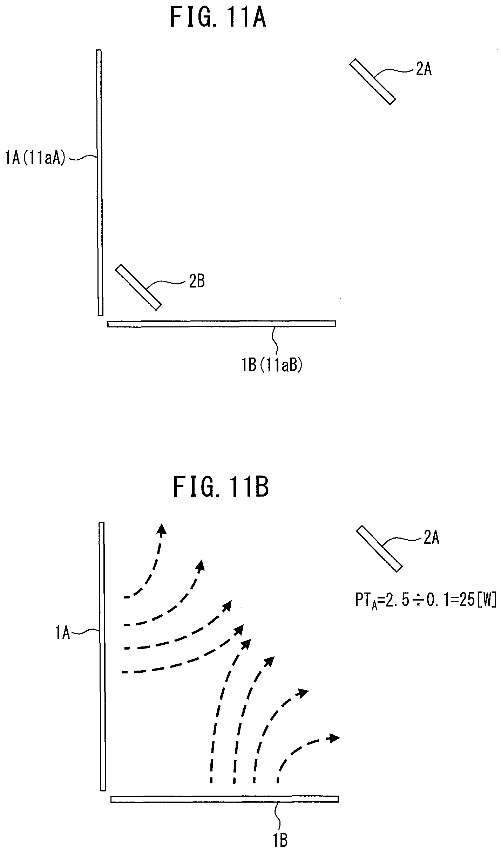

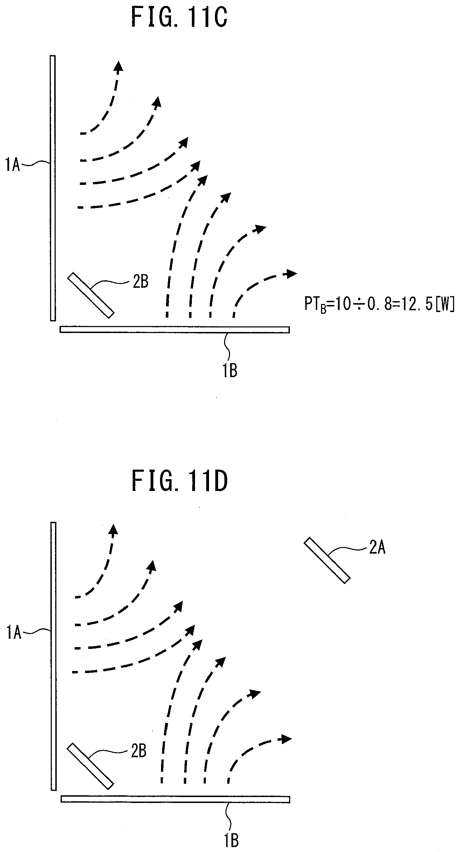

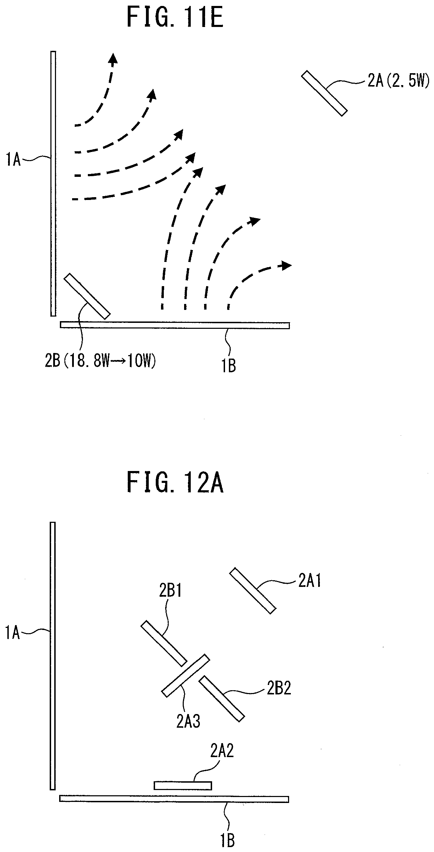

[FIG. 11] FIG. 11C is a diagram (3) for illustrating an example of the second processing in the wireless power transfer control method of the present embodiment.

[FIG. 11D] FIG. 11D is a diagram (4) for illustrating an example of the second processing in the wireless power transfer control method of the present embodiment.

[FIG. 11E] FIG. 11E is a diagram (5) for illustrating an example of the second processing in the wireless power transfer control method of the present embodiment.

[FIG. 12A] FIG. 12A is a diagram (1) for illustrating an example of third processing in the wireless power transfer control method of the present embodiment.

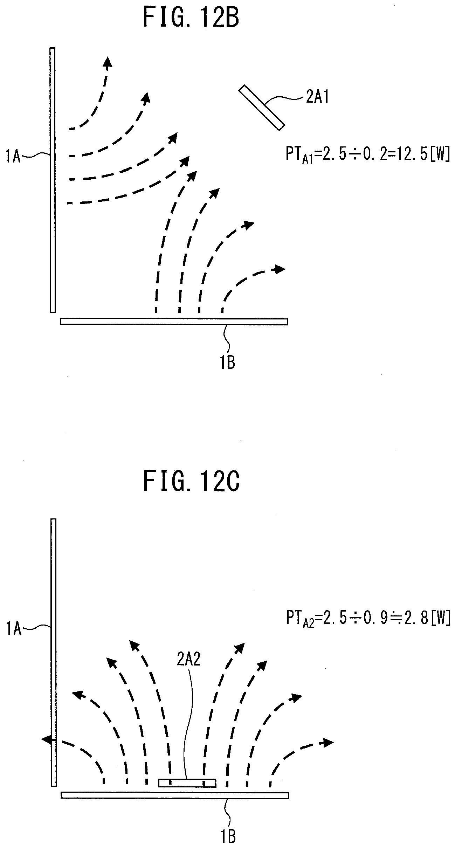

[FIG. 12B] FIG. 12B is a diagram (2) for illustrating an example of the third processing in the wireless power transfer control method of the present embodiment.

[FIG. 12C] FIG. 12C is a diagram (3) for illustrating an example of the third processing in the wireless power transfer control method of the present embodiment.

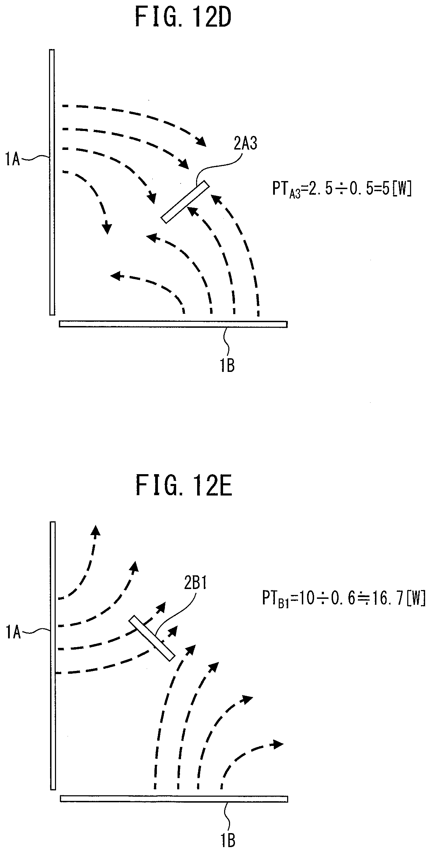

[FIG. 12D] FIG. 12D is a diagram (4) for illustrating an example of the third processing in the wireless power transfer control method of the present embodiment.

[FIG. 12E] FIG. 12E is a diagram (5) for illustrating an example of the third processing in the wireless power transfer control method of the present embodiment.

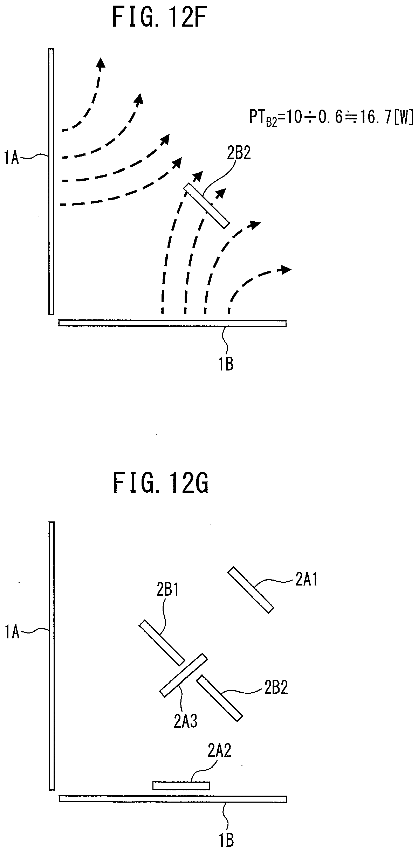

[FIG. 12F] FIG. 12F is a diagram (6) for illustrating an example of the third processing in the wireless power transfer control method of the present embodiment.

[FIG. 12G] FIG. 12G is a diagram (7) for illustrating an example of the third processing in the wireless power transfer control method of the present embodiment.

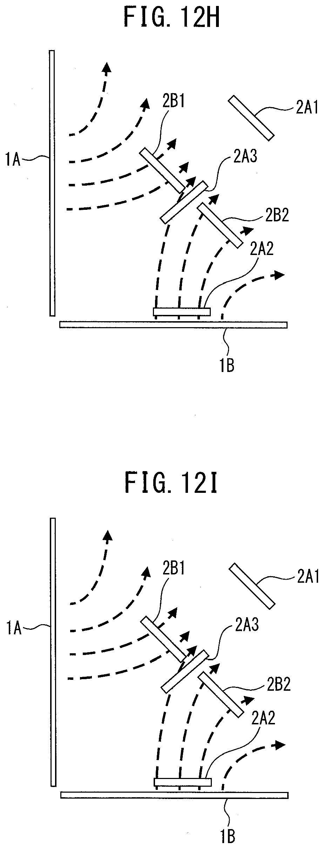

[FIG. 12H] FIG. 12H is a diagram (8) for illustrating an example of the third processing in the wireless power transfer control method of the present embodiment.

[FIG. 12I] FIG. 12I is a diagram (9) for illustrating an example of the third processing in the wireless power transfer control method of the present embodiment.

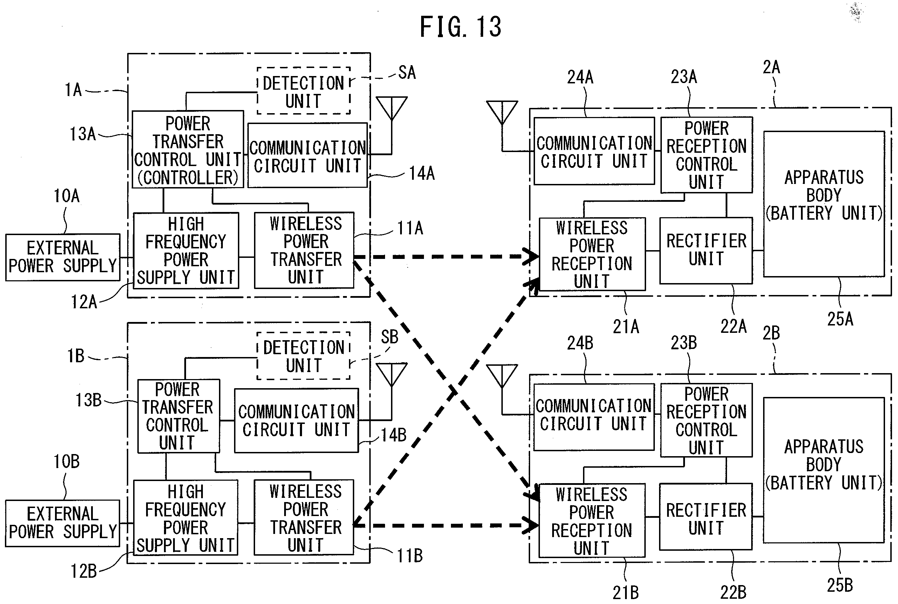

[FIG. 13] FIG. 13 is a block diagram depicting one example of a wireless power transfer system of the present embodiment.

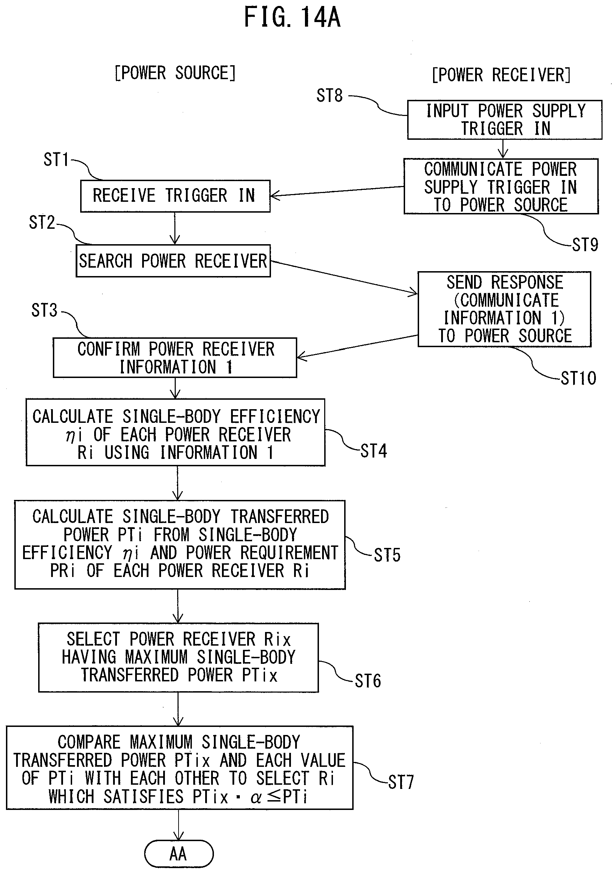

[FIG. 14A] FIG. 14A is a flowchart (1) for illustrating one example of processing of the wireless power transfer control method of the present embodiment.

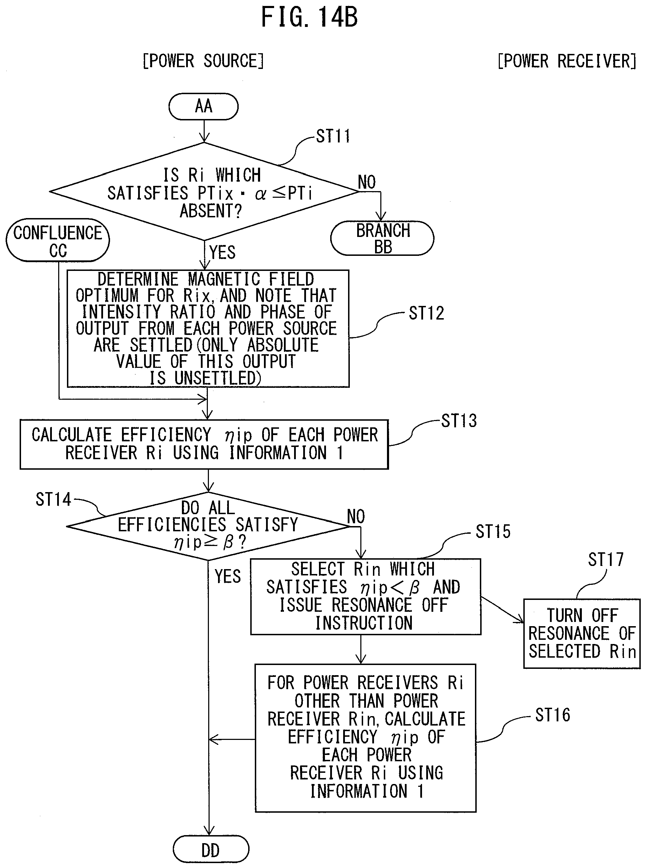

[FIG. 14B] FIG. 14B is a flowchart (2) for illustrating one example of the processing of the wireless power transfer control method of the present embodiment.

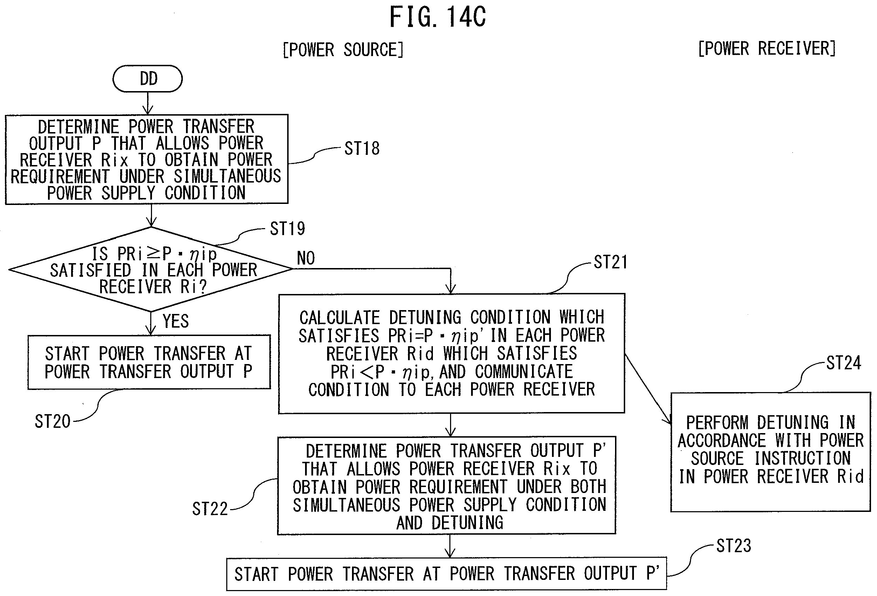

[FIG. 14C] FIG. 14C is a flowchart (3) for illustrating one example of the processing of the wireless power transfer control method of the present embodiment.

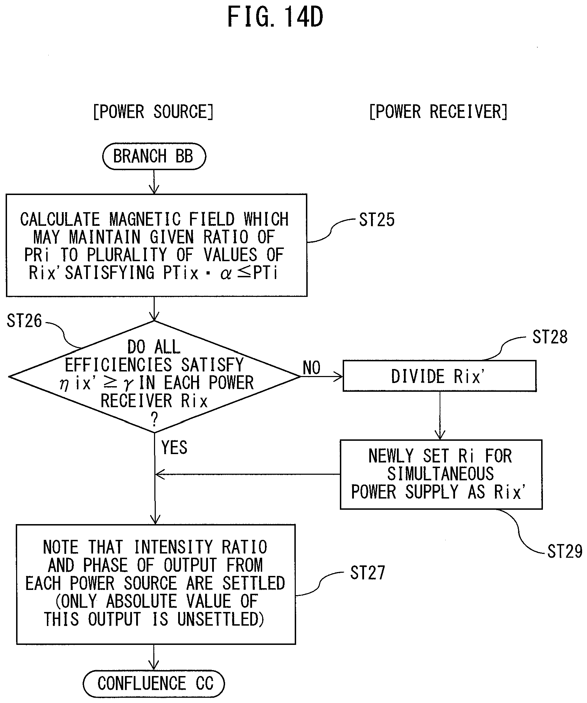

[FIG. 14D] FIG. 14D is a flowchart (4) for illustrating one example of the processing of the wireless power transfer control method of the present embodiment.

MODES FOR CARRYING OUT THE INVENTION

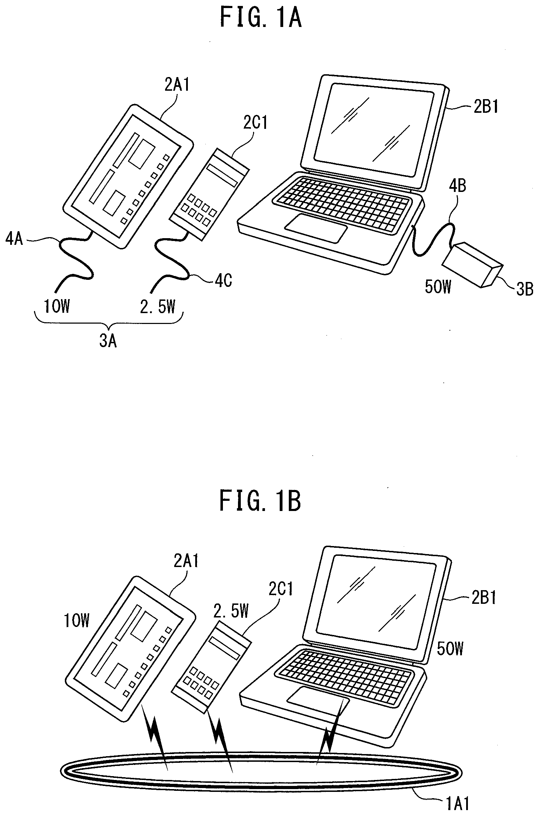

First, before describing embodiments of a wireless power transfer control method and a wireless power transfer system in detail, an example of a power transfer system and a wireless power transfer system including a plurality of power sources and a plurality of power receivers according to a related art will be described, with reference to FIG. 1 to FIG. 9B.

FIG. 1A is a diagram schematically depicting one example of a wired power transfer (wired power supply) system and FIG. 1B is a diagram schematically depicting one example of a wireless power transfer (wireless power supply) system. Referring to FIG. 1A and FIG. 1B, reference signs 2A1 to 2C1 denote power receivers.

The power receiver 2A1 represents, for example, a tablet computer (tablet) having a power requirement of 10 W, the power receiver 2B1 represents, for example, a notebook computer having a power requirement of 50 W, and the power receiver 2C1 represents, for example, a smartphone having a power requirement of 2.5 W. The power requirements correspond to, for example, powers for charging the rechargeable batteries (secondary batteries) in the respective power receivers 2A1 to 2C1.

As depicted in FIG. 1A, generally, when the secondary batteries of the tablet 2A1 and the smartphone 2C1 are charged, for example, the tablet 2A1 and the smartphone 2C1 are connected to a USB (Universal Serial Bus) terminal (or a dedicated power supply or the like) 3A of a Personal Computer via power supply cables 4A and 4C. When the secondary battery of the notebook computer 2B1 is charged, for example, the notebook computer 2B1 is connected to a dedicated power supply (AC-DC Converter) 3B via a power supply cable 4B.

In other words, even for the portable power receivers 2A1 to 2C1, power supply (wired power transfer) is generally performed by wire connection from the USB terminal 3A and the power supply 3B using the power supply cables 4A to 4C, as depicted in FIG. 1A.

In this case, for example, since the power supply cables 4A to 4C are connected to the power receivers 2A1 to 2C1, respectively, via connectors, detecting, for each connector, a power receiver (connection device) connected to the end of the connector may detect the number of devices and fix the supplied power in accordance with the connector shape. The user connects a power supply cable in accordance with the power requirement to recognize the power requirement and appropriately supply power to each connection device.

With the recent advance in non-contact power supply technology typified by electromagnetic induction, for example, wireless power supply (wireless power transfer) has come into practice in a shaver or an electric toothbrush. For example, power may be wirelessly transferred from a power source 1A1 to the tablet 2A1, the notebook computer 2B1, and the smartphone 2C1, as depicted in FIG. 1B.

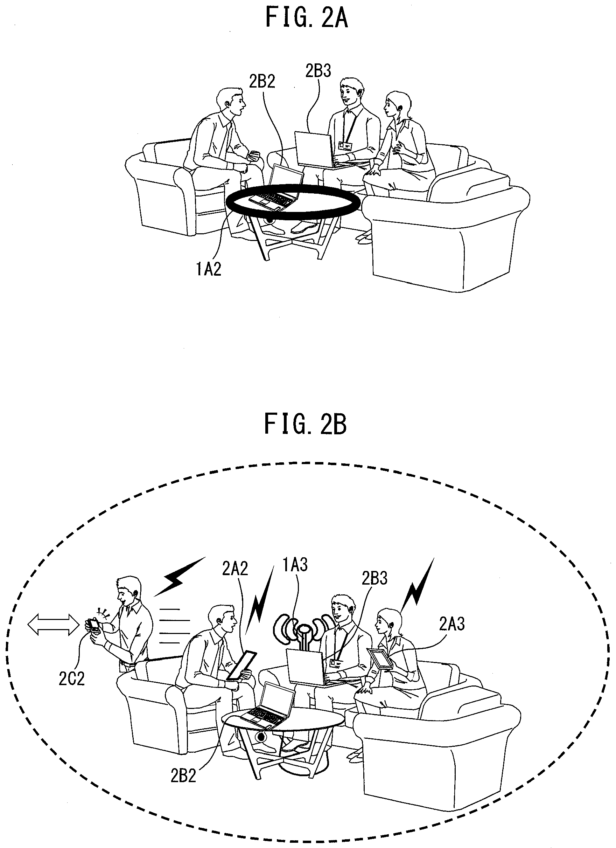

FIG. 2A is a diagram schematically depicting one example of a two-dimensional wireless power transfer (two-dimensional wireless power supply) system, and illustrates, for example, how power is wirelessly transferred by electromagnetic induction, as in, for example, the above-mentioned shaver or electric toothbrush.

As depicted in FIG. 2A, when power is wirelessly transferred using electromagnetic induction, power may be supplied to only a power receiver which is nearly in contact with a power source 1A2 because of the short power transfer distance even in non-contact power supply.

In other words, although power may be supplied to a power receiver (notebook computer) 2B2 placed on the power source (power receiver mount) 1A2, it is difficult to supply power to a notebook computer 2B3 separated from the power receiver mount 1A2. In this manner, the wireless power transfer system depicted in FIG. 2A serves as a two-dimensional wireless power supply system which enables free arrangement on the power receiver mount 1A2.

FIG. 2B is a diagram schematically depicting one example of a three-dimensional wireless power transfer (three-dimensional wireless power supply) system, and illustrates, for example, how power is wirelessly transferred using magnetic field resonance or electric field resonance. As depicted in FIG. 2B, when power is wirelessly transferred using magnetic field resonance or electric field resonance, power may be supplied from the power source 1A2 to a plurality of power receivers which fall within a predetermined range (the interior of a broken line in FIG. 2B).

In other words, power may be wirelessly transferred from a power source 1A3 to tablets 2A2 and 2A3, the notebook computers 2B2 and 2B3, and a smartphone 2C2 that fall within a predetermined range. Although FIG. 2B depicts only one power source 1A3, a plurality of power sources wirelessly transfer power to a plurality of power receivers at various angles and positions, using magnetic field resonance or electric field resonance.

In this manner, the wireless power transfer system depicted in FIG. 2B serves as, for example, a three-dimensional wireless power supply system which uses magnetic field resonance to enable a high power transfer efficiency even in a space farther than that using electromagnetic induction.

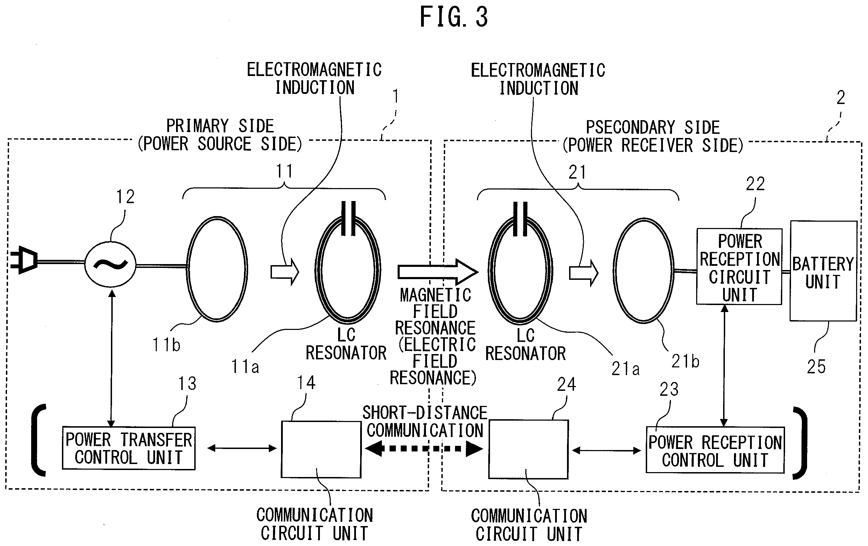

FIG. 3 is a block diagram schematically depicting one example of a wireless power transfer (three-dimensional wireless power supply) system. In FIG. 3, reference sign 1 denotes a primary side (a power source side: a power source), and reference sign 2 denotes a secondary side (a power receiver side: a power receiver).

As depicted in FIG. 3, the power source 1 includes a wireless power transfer unit 11, a high frequency power supply unit 12, a power transfer control unit 13, and a communication circuit unit (a first communication circuit unit) 14. In addition, the power receiver 2 includes a wireless power reception unit 21, a power reception circuit unit (a rectifier unit) 22, a power reception control unit 23, and a communication circuit unit (a second communication circuit unit) 24.

The wireless power transfer unit 11 includes a first coil (a power supply coil) 11b and a second coil (a power source resonance coil: a power source coil) 11a, and the wireless power reception unit 21 includes a third coil (a power receiver resonance coil: a power receiver coil) 21a and a fourth coil (a power extraction coil) 21b.

As depicted in FIG. 3, the power source 1 and the power receiver 2 perform energy (electric power) transmission from the power source 1 to the power receiver 2 by magnetic field resonance (electric field resonance) between the power source resonance coil 11a and the power receiver resonance coil 21a. Power transfer from the power source resonance coil 11a to the power receiver resonance coil 21a may be performed not only by magnetic field resonance but also electric field resonance or the like. However, the following description will be given mainly by way of example of magnetic field resonance.

The power source 1 and the power receiver 2 communicate with each other (near field communication) by the communication circuit unit 14 and the communication circuit unit 24. Note that, a distance of power transfer (a power transfer range) by the power source resonance coil 11a of the power source 1 and the power receiver resonance coil 21a of the power receiver 2 is set to be shorter than a distance of communication (a communication range) by the communication circuit unit 14 of the power source 1 and the communication circuit unit 24 of the power receiver 2.

In addition, power transfer by the power source resonance coil 11a and the power receiver resonance coil 21a is performed by a system (an out-band communication) independent from communication by the communication circuit units 14 and 24. Specifically, power transfer by the resonance coils 11a and 21a uses, for example, a frequency band of 6.78 MHz, whereas communication by the communication circuit units 14 and 24 uses, for example, a frequency band of 2.4 GHz.

The communication by the communication circuit units 14 and 24 may use, for example, a DSSS wireless LAN system based on IEEE 802.11b or Bluetooth (registered trademark).

The above described wireless power transfer system performs power transfer using magnetic field resonance or electric field resonance by the power source resonance coil 11a of the power source 1 and the power receiver resonance coil 21a of the power receiver 2, for example, in a near field at a distance of about a wavelength of a frequency used. Accordingly, the range of power transfer (a power transfer range) varies with the frequency used for power transfer.

The high frequency power supply unit 12 supplies power to the power supply coil (the first coil) 11b, and the power supply coil 11b supplies power to the power source resonance coil 11a arranged very close to the power supply coil 11b by using electromagnetic induction. The power source resonance coil 11a transfers power to the power receiver resonance coil 21a (the power receiver 2) at a resonance frequency that causes magnetic field resonance between the resonance coils 11a and 21a.

The power receiver resonance coil 21a supplies power to the power extraction coil (the fourth coil) 21b arranged very close to the power receiver resonance coil 21a, by using electromagnetic induction. The power extraction coil 21b is connected to the power reception circuit unit 22 to extract a predetermined amount of power. The power extracted from the power reception circuit unit 22 is used, for example, for charging a battery in a battery unit (load) 25, as a power supply output to the circuits of power receiver 2, or the like.

Note that, the high frequency power supply unit 12 of the power source 1 is controlled by the power transfer control unit 13, and the power reception circuit unit 22 of the power receiver 2 is controlled by the power reception control unit 23. Then, the power transfer control unit 13 and the power reception control unit 23 are connected via the communication circuit units 14 and 24, and adapted to perform various controls so that power transfer from the power source 1 to the power receiver 2 may be performed in an optimum state.

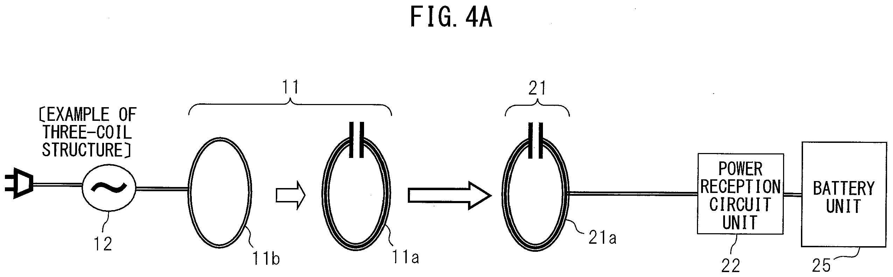

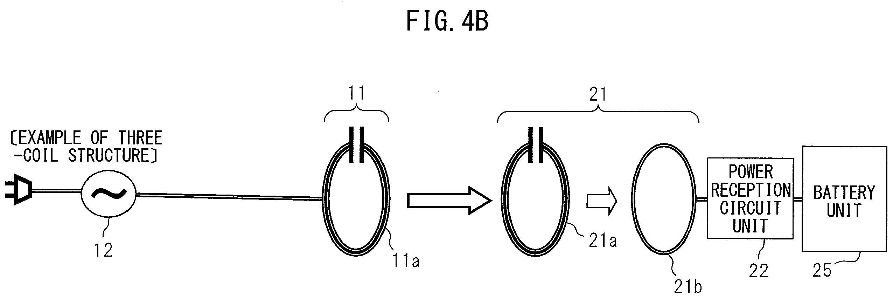

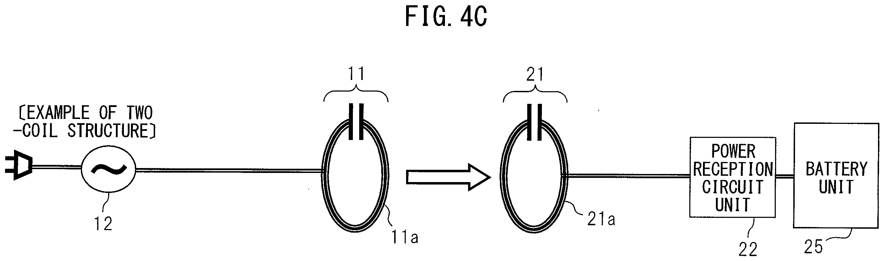

FIG. 4A to FIG. 4C are diagrams for illustrating modified examples of a transmission coil in the wireless power transfer system of FIG. 3. Note that, FIG. 4A and FIG. 4B depict exemplary three-coil structures, and FIG. 4C depicts an exemplary two-coil structure.

Specifically, in the wireless power transfer system depicted in FIG. 3, the wireless power transfer unit 11 includes the first coil 11b and the second coil 11a, and the wireless power reception unit 21 includes the third coil 21a and the fourth coil.

On the other hand, in the example of FIG. 4A, the wireless power reception unit 21 is set as a single coil (a power receiver resonance coil: an LC resonator) 21a, and in the example of FIG. 4B, the wireless power transfer unit 11 is set as a single coil (a power source resonance coil: an LC resonator) 11a.

Further, in the example of FIG. 4C, the wireless power reception unit 21 is set as a single power receiver resonance coil 21a and the wireless power transfer unit 11 is set as a single power source resonance coil 11a. Note that, FIG. 4A to FIG. 4C are merely examples and, obviously, various modifications may be made.

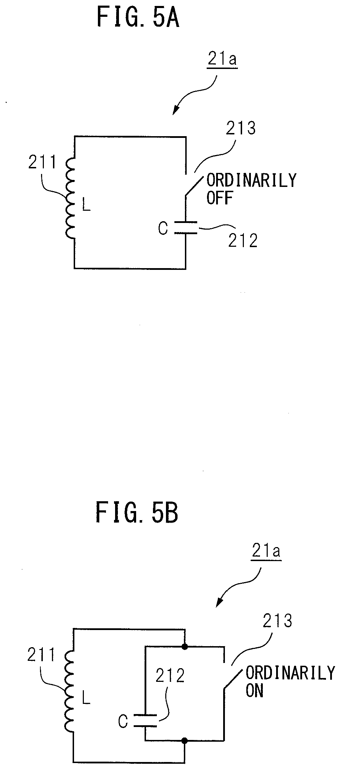

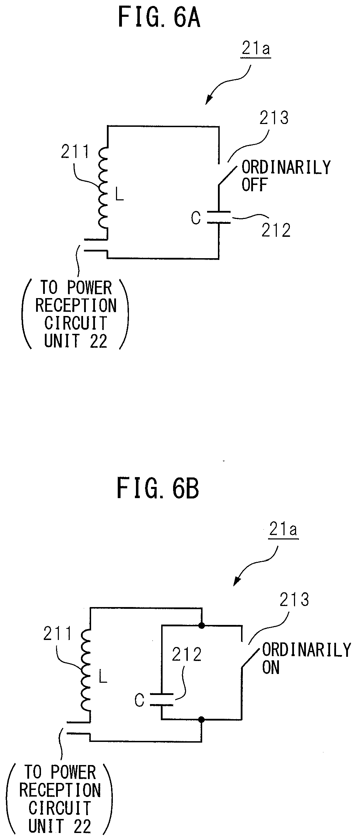

FIG. 5A to FIG. 5D are circuit diagrams depicting examples of an independent resonance coil (the power receiver resonance coil 21a), and FIG. 6A to FIG. 6D are circuit diagrams depicting examples of a resonance coil (the power receiver resonance coil 21a) connected to a load or a power supply.

Note that, FIG. 5A to FIG. 5D correspond to the power receiver resonance coil 21a of FIG. 3 and FIG. 4B, and FIG. 6A to FIG. 6D correspond to the power receiver resonance coil 21a of FIG. 4A and FIG. 4C.

In the examples depicted in FIG. 5A and FIG. 6A, the power receiver resonance coil 21a includes a coil (L) 211, a capacitor (C) 212, and a switch 213 connected in series, in which the switch 213 is ordinarily in an off-state. In the examples depicted in FIG. 5B and FIG. 6B, the power receiver resonance coil 21a includes the coil (L) 211 and the capacitor (C) 212 connected in series, and the switch 213 connected in parallel to the capacitor 212, in which the switch 213 is ordinarily in an on-state.

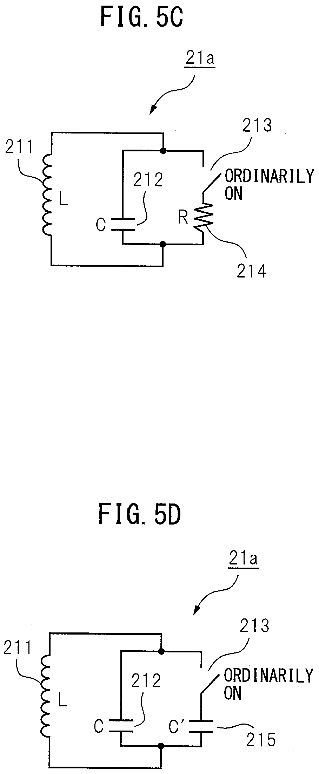

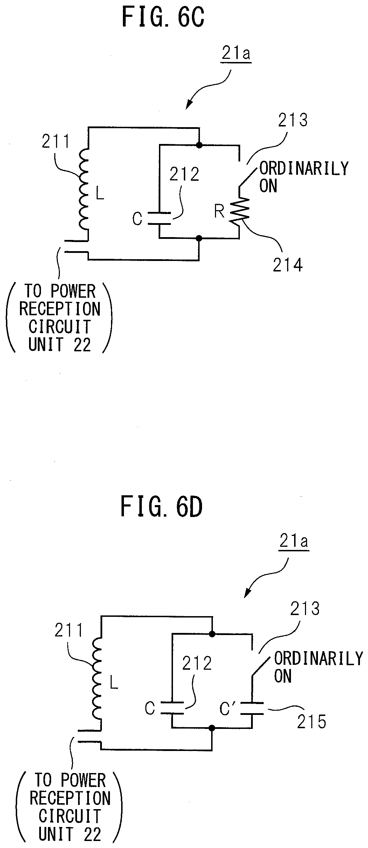

In the examples depicted in FIG. 5C and FIG. 6C, the power receiver resonance coil 21a of FIG. 5B and FIG. 6B includes the switch 213 and the resistance (R) 214 connected in series and arranged in parallel to the capacitor 212, in which the switch 213 is ordinarily in the on-state.

The examples of FIG. 5D and FIG. 6D depict the power receiver resonance coil 21a of FIG. 5B and FIG. 6B, in which the switch 213 and another capacitor (C') 215 connected in series are arranged in parallel to the capacitor 212, and the switch 213 is ordinarily in the on-state.

In each of the power receiver resonance coils 21a described above, the switch 213 is set to "off" or "on" so that the power receiver resonance coil 21a does not operate ordinarily. The reason for this is, for example, to prevent heat generation or the like caused by power transfer to a power receiver 2 not in use (on power receiver) or to a power receiver 2 out of order.

In the above structure, the power source resonance coil 11a of the power source 1 may also be set as in FIG. 5A to FIG. 5D and FIG. 6A to FIG. 6D. However, the power source resonance coil 11a of the power source 1 may be set so as to operate ordinarily and may be controlled to be turned ON/OFF by an output of the high frequency power supply unit 12. In this case, in the power source resonance coil 11a, the switch 213 is to be shortcircuited in FIG. 5A and FIG. 6A.

In this manner, when a plurality of power receivers 2 are present, selecting only the power receiver resonance coil 21a of a predetermined power receiver 2 for receiving power transmitted from the power source 1 and making the power receiver resonance coil 21a operable enables power to be transferred (time-division power transfer) to the selected power receiver 2.

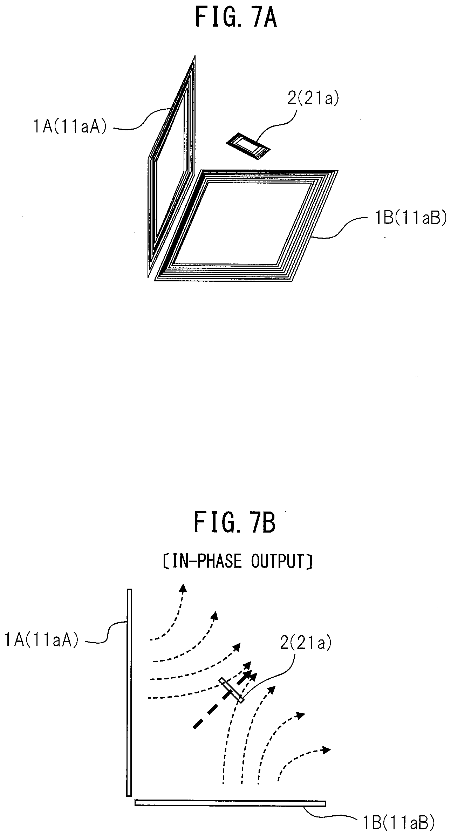

FIG. 7A to FIG. 7C are diagrams for illustrating examples of controlling a magnetic field by a plurality of power sources. In FIG. 7A to FIG. 7C, reference signs 1A and 1B denote power sources, and reference sign 2 denotes a power receiver.

As depicted in FIG. 7A, a power source resonance coil 11aA for power transfer used for magnetic field resonance of the power source 1A and a power source resonance coil 11aB for power transfer used for magnetic field resonance of the power source 1B are arranged, for example, so as to be orthogonal to each other.

Further, the power receiver resonance coil 21a used for magnetic field resonance of the power receiver 2 is arranged at a different angle (an angle not parallel) at a position surrounded by the power source resonance coils 11aA and 11aB.

Note that, the power source resonance coils (LC resonators) 11aA and 11aB may also be provided in a single power source. In other words, a single power source 1 may include a plurality of wireless power transfer units 11.

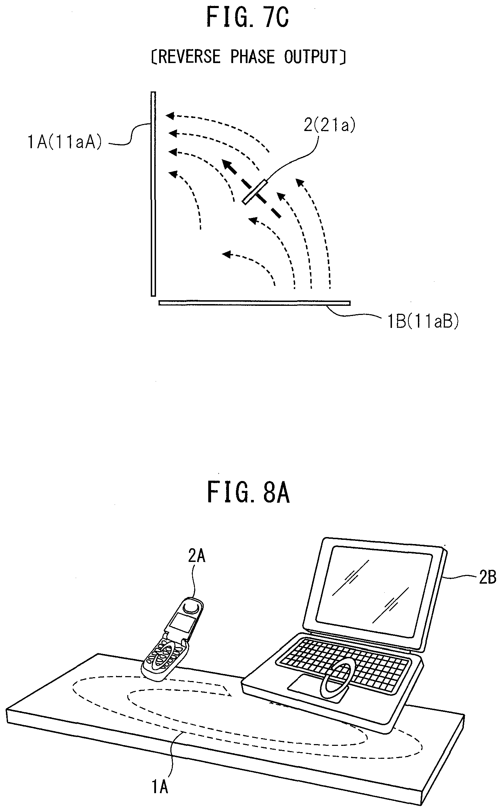

FIG. 7B depicts a situation in which the power source resonance coils 11aA and 11aB output an in-phase magnetic field, and FIG. 7C depicts a situation in which the power source resonance coils 11aA and 11aB output a reverse phase magnetic field.

For example, by comparing the cases where the two orthogonal power source resonance coils 11aA and 11aB output an in-phase magnetic field and a reverse phase magnetic field, a synthesized magnetic field becomes a 90° rotation relationship in each other, so that power transfer is carried out to each power receiver 2 (power receiver resonance coil 21a) with suitably transmitting from the power source resonance coils 11aA and 11aB based on the postures of the power receiver 2.

As described above, when power is transferred to the power receiver 2 positioned at an arbitrary position and an arbitrary posture (angle) by the plurality of power sources 1A and 1B, magnetic fields occurring in the power source resonance coils 11aA and 11aB of the power sources 1A and 1B change variously.

The above-mentioned wireless power transfer system includes a plurality of power sources and at least one power receiver and adjusts outputs (strengths and phases) between the plurality of power sources according to positions (X, Y and Z) and postures ($\theta_X$, $\theta_Y$ and $\theta_Z$) of the power receiver.

In addition, it will be seen that, with respect to three-dimensional space, for example, using three or more power sources in the actual three-dimensional space to adjust the respective output phase differences and the output intensity ratios may control the magnetic field (electric field) to any direction in the three-dimensional space.

FIG. 8A to FIG. 8C are diagrams for illustrating one example of a two-dimensional wireless power transfer control method for a plurality of power receivers. FIG. 8A illustrates, for example, how power is wirelessly supplied to two power receivers 2A and 2B having different power requirements by one power source 1A, using magnetic field resonance.

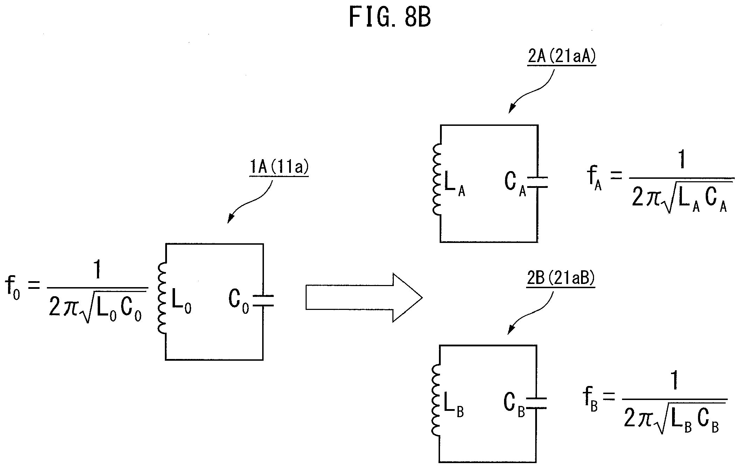

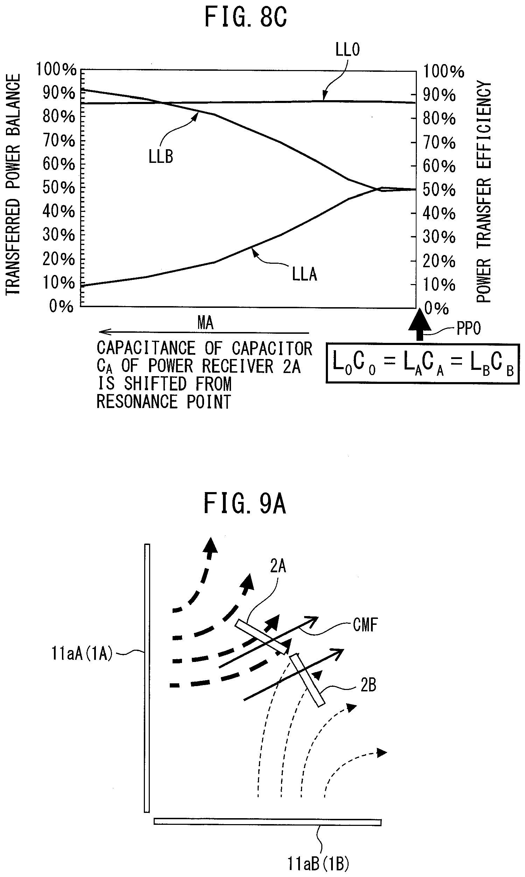

FIG. 8B illustrates, for example, how power is wirelessly supplied from the power source 1A (the power source resonance coil 11a) to the power receiver 2A (a power receiver resonance coil 21aA) and the power receiver 2B (a power receiver resonance coil 21aB). FIG. 8C illustrates a method for shifting (detuning) the resonance point of the power receiver 2B to control the power distribution ratio.

The power receiver 2A represents, for example, a mobile phone having a power requirement of 5W and the power receiver 2B represents, for example, a notebook computer having a power requirement of 50 W. For the sake of simplicity, an LC resonator (a wireless power reception unit) for the mobile phone 2A and an LC resonator for the notebook computer 2B have the same specifications. Referring to FIG. 8C, reference sign LL0 denotes the overall power transfer efficiency; LLA, the power received by the mobile phone 2A; and LLB, the power received by the notebook computer 2B.

In simultaneous wireless power supply to a plurality of power receivers, the amount of power received by each power receiver may often be different. For example, as depicted in FIG. 8A, even for a mobile phone having a power requirement of 5 W and a notebook computer having a power requirement of 50 W, or for the same types of power receivers, the power requirement may be different depending on the remaining battery level.

When, for example, the positions or orientations of the power receivers 2A and 2B have only a small difference, and they are equipped with power receiver coils having the same specifications, power is equally distributed. Specifically, let $L_A$ be the inductance in the power receiver resonance coil of the mobile phone 2A, $C_A$ be its capacitance, $L_B$ be the inductance in the power receiver resonance coil of the notebook computer 2B, and $C_B$ be its capacitance.

Then, as indicated by reference sign PP0 in FIG. 8C, LoCo = $L_A C_A$ = $L_B C_B$ holds in the as-is state (the state in which the resonance point is not shifted). In other words, each resonance frequency in FIG. 8B satisfies fo = $f_A$ = $f_B$.

Accordingly, assuming, for example, that the power transferred from the power source 1A is 68.75 W and its power transfer efficiency is 80%, both the mobile phone 2A and the notebook computer 2B receive a power of 27.5 W.

In other words, as depicted in FIG. 8A, even for power receivers 2A and 2B having power requirements different by 10 times, when, for example, an output corresponding to a power requirement of 55 W is output from the power source 1A, the power receivers 2A and 2B each receive a power of 27.5 W.

In this case, since the mobile phone 2A has a power requirement of 5 W and the notebook computer 2B has a power requirement of 50 W, the resonance point of the power receiver resonance coil of the mobile phone 2A is shifted to control the power reception efficiency ($\eta$ip) to lower it.

For example, as indicated by an arrow MA in FIG. 8C, the capacitance $C_A$ of the capacitor in the power receiver resonance coil 21aA of the mobile phone 2A is controlled to be reduced (or increased) to make a shift from the resonance point of the power receiver resonance coil that maximizes the power reception efficiency.

In other words, as indicated by the arrow MA in FIG. 8C, intentionally shifting the resonance condition (shifting the capacitance $C_A$) reduces the Q value so that the received power LLA of the mobile phone 2A can be gradually decreased from 27.5 W at the resonance point (P0) and, for example, set to a power requirement of 5 W.

In this case, most of power that is not received by the mobile phone 2A becomes power received by the notebook computer 2B. In other words, obviously, the received power LLB of the notebook computer 2B increases with a reduction in received power LLA of the mobile phone 2A, and the overall power transfer efficiency LL0 in the wireless power transfer system lowers only slightly.

In this manner, changing the resonance condition and, specifically, changing the capacitance value (capacitance $C_A$) of the resonance capacitor (the capacitor) 212 of the power receiver 2A may adjust coupling, thus controlling the received power to a desired distribution ratio.

Importantly, even when the efficiency of the power receiver 2A whose resonance condition has been changed lowers, the power transmission and reception efficiency of the entire system is maintained nearly constant and the power to the power receiver 2B increases by the amount of reduction in power having reached the power receiver 2A. As a result, obviously, compared to single-body power supply to only one of the power receivers 2A and 2B, received power may be distributed at a desired ratio while power is supplied to the entire system (both the power receivers 2A and 2B) at nearly the same efficiency.

FIG. 9A is a diagram for illustrating one example of a three-dimensional wireless power transfer control method for a plurality of power receivers, and illustrates a method for controlling the currents and phases supplied to a plurality of power source resonance coils (power source coils) to change the direction of a magnetic field to control the power to be transferred to the power receivers 2A and 2B.

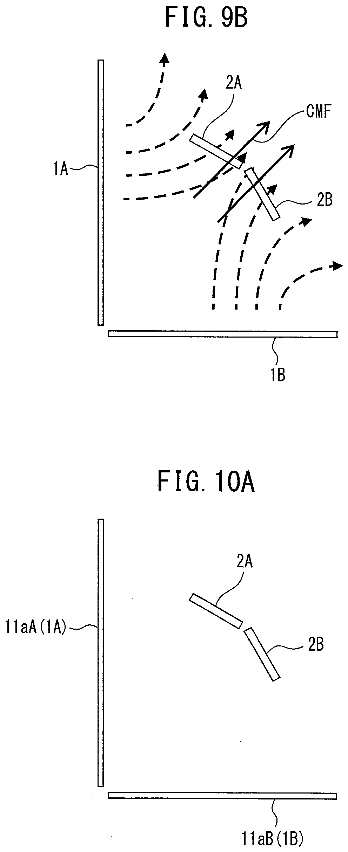

FIG. 9B is a diagram for illustrating another example of a three-dimensional wireless power transfer control method for a plurality of power receivers, and illustrates a method for reducing the power received by at least one power receiver while maintaining a given overall power transfer efficiency to control the power distribution ratio between the power receivers 2A and 2B.

Referring to FIG. 9A and FIG. 9B, the power receiver 2A represents, for example, a smartphone having a power requirement of 2.5 W and the power receiver 2B represents, for example, a tablet computer (tablet) having a power requirement of 10 W.

Reference signs 11aA and 11aB denote, for example, two orthogonal power source resonance coils, which may serve as different power sources 1A and 1B but may even be provided in one power source, as described earlier. The following description assumes that the power source resonance coils 11aA and 11aB serve as different power sources 1A and 1B.

When, for example, the power receiver 2A (smartphone) has a power requirement of 2.5 W and the power receiver (tablet) 2B has a power requirement of 10 W, the control methods depicted in FIG. 9A and FIG. 9B, for example, are possible for simultaneous power supply by the power sources 1A and 1B in consideration of these power requirements.

In other words, the control method depicted in FIG. 9A controls the strengths and phases of magnetic fields output from the power sources 1A and 1B to control a synthetic magnetic field generated by the power sources 1A and 1B so that the power receiver 2A receives a power of 2.5 W and the power receiver 2B receives a power of 10 W.

Note that the strengths of magnetic fields are controlled to, for example, increase the current of the power source resonance coil 11aA and reduce the current of the power source resonance coil 11aB so that the direction of a synthetic magnetic field CMF forms a nearly right angle with the power receiver resonance coil 21aA of the power receiver 2A.

In other words, the control method depicted in FIG. 9A controls the strengths and phases of magnetic fields output from the power sources 1A and 1B to control the direction of a synthetic magnetic field CMF generated by the power sources 1A and 1B, so that the power receiver 2A receives a power of 2.5 W and the power receiver 2B receives a power of 10 W.

The control method depicted in FIG. 9B performs control to shift the resonance point of the power receiver resonance coil (21aA) of the power receiver 2A having a low power requirement, as described with reference to FIG. 8A to FIG. 8C, while keeping the strengths and phases of magnetic fields output from the power sources 1A and 1B the same. In other words, the power distribution ratio is controlled by detuning the power receiver 2A while keeping the synthetic magnetic field CMF the same.

However, in wireless power transfer (wireless power supply), and especially in three-dimensional wireless power supply, various parameters may be preferably adjusted in, for example, current and phase control of a plurality of power sources and control of the power distribution ratio between a plurality of power receivers.

Specifically, examples of the parameters include the resonance condition of each power receiver which performs power distribution, and the output intensity (current intensity) of each power source which controls a magnetic field and its phase, and the number of such parameters grows more enormous with increases in number of power sources and power receivers.

In other words, given an infinite time, optimum conditions may be determined by simulation or test power transfer with all the parameters changed, but it is difficult to obtain optimum conditions in actual wireless power transfer which may preferably involve a finite time (a predetermined real-time performance). Further, since the power transfer efficiency to be evaluated is closely related to the aforementioned parameters, it is impractical to search for an optimum solution in a round-robin fashion in an actual wireless power transfer system.

An embodiment of a wireless power transfer control method and a wireless power transfer system will be described in detail below with reference to the accompanying drawings. The present embodiment is applicable to a wireless power transfer system which uses at least one power source to wirelessly transfer power to a plurality of power receivers.

Although the following description mainly takes as an example the case where two power source resonance coils (power source coils) wirelessly transfer power to a plurality of (two to five) power receivers using magnetic field resonance, three or more power source resonance coils may be used.

The number of power source resonance coils is equal to that of power sources when one power source includes one power source resonance coil, while one power source may include a plurality of power source resonance coils. Further, the present embodiment is similarly applicable to a wireless power transfer system which uses not magnetic field resonance but electric field resonance.

An overview of a wireless power transfer system which employs the present embodiment will be described first. In a wireless power transfer system which employs the present embodiment, each power receiver may turn on and off a resonance system (power receiver resonance coil) to obtain a single-body transfer efficiency ($\eta i$) of each power receiver.

The single-body transfer efficiency of each power receiver means the efficiency upon optimization of the output (intensity ratio/phase) of each power source when only one selected power receiver is located and other power receivers are absent or they have markedly deviated resonance conditions. In this case, a power requirement required by the power receiver may be obtained by communication with the power receiver.

In the present embodiment, for example, although the entire system may be controlled using either power source as a master, not either power source but either power receiver may be used, and not a power source itself but another computer connected via a communication line, for example, may even perform such control.

A single-body transferred power PTi of each power receiver may be calculated as:

$$PTi = PRi/\eta i \qquad (i)$$

where $\eta i$ is the single-body power transfer efficiency of a plurality of power source coils (power sources) to the power receiver, and PRi is the power requirement (the single-body power requirement) of the power receiver Ri.

In a wireless power transfer system which employs the present embodiment, all the resonance systems (power receiver resonance systems) of the power receivers are turned off and only the resonance system of a specific power receiver is turned on to enable power transfer (first power transfer) to only the specific power receiver. This enables time-division power supply in which power is sequentially transferred to each power receiver by time-division switching.

Further, the currents (intensities) and phases of a plurality of power source resonance coils are controlled to control the direction of a magnetic field (a synthetic magnetic field) to a specific direction to enable simultaneous power transfer (second power transfer). This allows wireless power transfer (three-dimensional wireless power supply) to power receivers having various postures.

In the resonance system (the power receiver resonance coil) of each power receiver, shifting the resonance point may reduce (detune) the power received by a specific power receiver with its resonance point shifted, while maintaining the overall efficiency. In this manner, even in the same synthetic magnetic field, detuning the power received by a specific power receiver may adjust the power distribution ratio to a desired ratio to enable simultaneous power transfer (third power transfer).

In the wireless power transfer system according to the present embodiment, a power receiver (a first power receiver) Rix having a maximum single-body transferred power PTix at which the single-body transferred power PTi of each power receiver calculated in accordance with above-mentioned equation (i) is maximum is selected. Power is transferred (fourth power transfer) on the basis of the maximum single-body transferred power PTix. This may improve the overall power transfer efficiency to a plurality of power receivers.

In the present embodiment, for example, each power receiver included in the wireless power transfer system is regarded as having no priority level. In other words, the following description assumes, for example, that in the workplace, when notebook computers (power receivers) carried by employees who will travel on business are preferentially charged, processing such as starting power transfer to the notebook computers is not immediately performed.

In the wireless power transfer control method according to the present embodiment, for example, first power transfer is used to independently handle each power receiver to simplify processing (control). Further, fourth power transfer is used to select (specify) a first power receiver having the maximum single-body transferred power PTix at which the single-body transferred power PTi of the power receiver is maximum, thus improving the power transfer efficiency of the entire system.

On the basis of the selected first power receiver, the current and phase of each power source (power source resonance coil) are controlled to, for example, intentionally shift and detune the resonance point of the power receiver resonance coil for a power receiver having a received power higher than the power requirement.

For a power receiver having a received power lower than a predetermined value, for example, power reception is stopped by turning off the resonance system of the power receiver and power is supplied at the next opportunity, such as after the completion of power supply to the first power receiver.

Further, power receivers close to the maximum single-body transferred power PTix of the first power receiver (e.g., 90% or more of PTix) are grouped as a power receiver group, together with the first power receiver, and a plurality of power source coils are controlled to simultaneously transfer power to the power receivers included in the power receiver group.

The single-body transferred power PTi of the first power receiver and the power receivers to be grouped is set equal to or higher than a predetermined ratio (90% = $\alpha$) to the maximum single-body transferred power PTix of the first power receiver by way of example only, and it may be set to various ratios.

In this manner, after the direction of a synthetic magnetic field generated by a plurality of power sources is determined, a power receiver having a received power higher than the power requirement of a plurality of power receivers included in the power receiver group is detuned. For a power receiver having a received power lower than a predetermined value, for example, power reception is stopped by turning off the resonance system of the power receiver.

Even for power receivers which are not included in the power receiver group, a power receiver having a received power higher than the power requirement is detuned. For a power receiver having a received power lower than a predetermined value, for example, power reception is stopped by turning off the resonance system of the power receiver.

Note that the power receiver group is divided when the power reception efficiency $\eta$ip obtained for each power receiver is not equal to or higher than a predetermined ratio (e.g., 10% = $\beta$) upon simultaneous power transfer to the power receivers included in the power receiver group. For example, when m power source coils (power sources) are provided, the power receiver group is divided by processing the m power source coils as m-dimensional vectors, wherein m is an integer of two or more.

The m-dimensional vectors may be used to process phases from the m power source coils only in two directions: in-phase and reverse phase. This is because the single-body transferred powers of the respective power receivers included in the power receiver group or the divided power receiver group are nearly equal to each other (e.g., 90% or more of PTix), and normalization may be therefore considered to be performed by power, which means that it suffices to take only the phase direction into consideration.

As a result, the currents of the power sources (the power source resonance coils) may be regarded as vectors with their magnitudes normalized, and for example, currents P1 to P4 of four power source resonance coils may be represented as P1(I11, I12, I13), P2(I21, I22, I23), P3(I31, I32, I33), and P4(I41, 142, I43).

A vectorial angle is calculated as the angle that one arbitrary (given) vector makes with another vector of the m-dimensional vectors. When the power receiver group is divided into n parts, a power receiver having a vectorial angle that falls within the range in which the angle gets narrower with an increase in n may be classified into the divided power receiver group, wherein n is an integer of two or more.

Specifically, when n = 2 (division into two parts), a power receiver having a vectorial angle that falls within the range of 90°/2 = 45° is classified into the divided power receiver group. Even after division into two parts, when the power reception efficiency $\eta$ip obtained for each power receiver included in the power receiver group is not equal to or higher than a predetermined ratio (e.g., 10% = $\beta$), for example, n+1 (= 3: division into three parts) is set. In division into three parts, a power receiver having a vectorial angle that falls within the range of 90°/3 = 30° is classified into the divided power receiver group.

When the power receiver group is divided, the range is set to 45° in division into two parts and 30° in division into three parts by way of example only, and it may be set to various angles, as a matter of course.

FIG. 10A to FIG. 10E are diagrams for illustrating an example of first processing in the wireless power transfer control method of the present embodiment. As is obvious from a comparison between FIG. 10A, and FIG. 9A and FIG. 9B, two orthogonal power source resonance coils 11aA and 11aB (power sources 1A and 1B) and two power receivers 2A and 2B are provided in FIG. 10A to FIG. 10E, as in FIG. 9A and FIG. 9B.

Although the following description assumes that power source resonance coils 11aA and 11aB are provided in different power sources 1A and 1B, two power source resonance coils 11aA and 11aB may be provided in one power source. The power receiver 2A represents, for example, a smartphone having a power requirement of 2.5 W and the power receiver 2B represents, for example, a tablet (tablet computer) having a power requirement of 10 W.

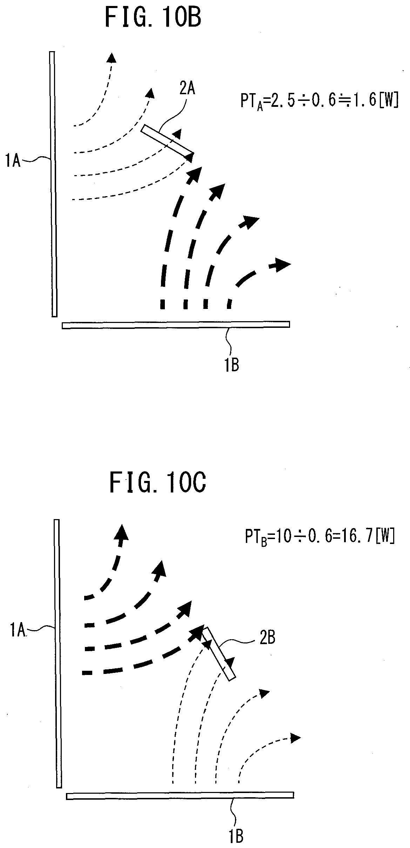

First, as depicted in FIG. 10B, a single-body transferred power $PT_A$ to only the power receiver 2A (smartphone) is obtained. In other words, a power receiver resonance coil 21bB (a power receiver resonance system or a resonance system) of the power receiver (tablet) 2B is turned off and only the power receiver 2A is turned on to obtain a single-body transferred power $PT_A$ of the power receiver 2A.

Specifically, when, for example, the power sources 1A and 1B generate in-phase outputs at an output ratio (intensity ratio) of 1 : 2, and the single-body power transfer efficiency $\eta_A$ of the power receiver 2A is set to 60%, since the power requirement of the power receiver 2A is 2.5 W, the single-body transferred power $PT_A$ of the power receiver 2A is $PT_A = 2.5/0.6 \approx 4.2$ [W].

Next, as depicted in FIG. 10C, a single-body transferred power $PT_B$ to only the power receiver 2B is obtained. In other words, the resonance system of the power receiver 2A is turned off and only the power receiver 2B is turned on to obtain a single-body transferred power $PT_B$ of the power receiver 2B.

Specifically, when, for example, the power sources 1A and 1B generate in-phase outputs at an output ratio of 2 : 1, and the single-body power transfer efficiency $\eta_B$ of the power receiver 2B is set to 60%, since the power requirement of the power receiver 2B is 10 W, the single-body transferred power $PT_B$ of the power receiver 2B is $PT_B = 10/0.6 \approx 16.7$ [W]. Accordingly, the power receiver 2B has a maximum single-body transferred power because 4.2 < 16.7, and the maximum single-body transferred power PTix is nearly 16.7 W.

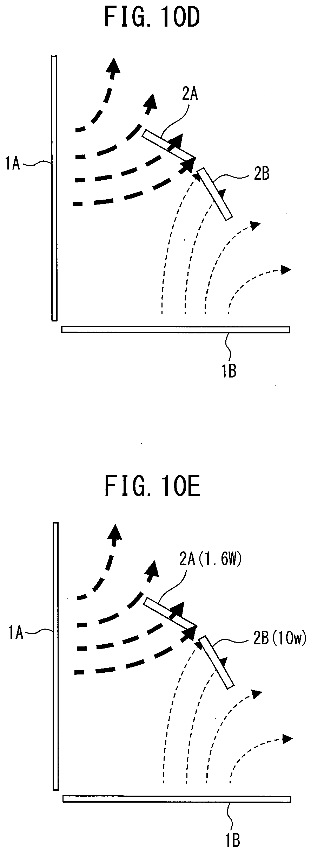

Hence, the power sources 1A and 1B generate in-phase outputs at an output ratio of 2 : 1, and the direction of a synthetic magnetic field generated by the power sources 1A and 1B is determined. In this case, as depicted in FIG. 10D, when power is supplied to the two power receivers 2A and 2B, for example, the power reception efficiency of the power receiver 2A is 8% and the power reception efficiency of the power receiver 2B is 50%.

To obtain a power of 10 W received by the power receiver 2B, when the power transferred by the power sources 1A and 1B is set to 20 W, the power received by the power receiver 2A becomes 20 x 0.8 = 1.6 [W], which is less than 2.5 W that is the power requirement of the power receiver 2A.

In this case, in the present example of first processing, for example, simultaneous power supply is performed in the as-is state (in the state in which the power received by the power receiver 2A is 1.6 W) without detuning the power receiver 2B (third power transfer). In other words, as depicted in FIG. 10E, the output ratio between the power sources 1A and 1B is 2 : 1, the power received by the power receiver 2A is 1.6 W, the power received by the power receiver 2B is 10 W, and the overall power transfer efficiency is 58%. When, for example, power supply to the power receiver 2B is complete, the resonance system (the power receiver resonance coil 21aB) of the power receiver 2B is turned off and the above-mentioned processing is repeated.

FIG. 11A to FIG. 11E are diagrams for illustrating an example of second processing in the wireless power transfer control method of the present embodiment, and detuning is performed in the present example of second processing, unlike the above-mentioned example of first processing. Two orthogonal power sources 1A and 1B (power source resonance coils 11aA and 11aB) and two power receivers 2A and 2B are provided in FIG. 11A to FIG. 11E as well.

As in the above-mentioned example of first processing, the power receiver 2A represents a smartphone having a power requirement of 2.5 W and the power receiver 2B represents a tablet having a power requirement of 10 W. Note, however, that the power receivers 2A and 2B are arranged parallel at different distances, as depicted in FIG. 11A.

First, as depicted in FIG. 11B, the resonance system of the power receiver (tablet) 2B is turned off and only the power receiver 2A (smartphone) is turned on to obtain a single-body transferred power $PT_A$ of the power receiver 2A. Specifically, when, for example, the power sources 1A and 1B generate in-phase outputs at an output ratio of 1 : 1, and the single-body power transfer efficiency $\eta_A$ of the power receiver 2A is set to 10%, since the power requirement of the power receiver 2A is 2.5 W, the single-body transferred power $PT_A$ of the power receiver 2A is $PT_A = 2.5/0.1 = 25$ [W].

Next, as depicted in FIG. 11C, the resonance system of the power receiver 2A is turned off and only the power receiver 2B is turned on to obtain a single-body transferred power $PT_B$ of the power receiver 2B. Specifically, when, for example, the power sources 1A and 1B generate in-phase outputs at an output ratio of 1 : 1, and the single-body power transfer efficiency $\eta_B$ of the power receiver 2B is set to 80%, since the power requirement of the power receiver 2B is 10 W, the single-body transferred power $PT_B$ of the power receiver 2B is $PT_B = 10/0.8 = 12.5$ [W]. Accordingly, the power receiver 2A has a maximum single-body transferred power because 25 > 12.5, and the maximum single-body transferred power PTix is 25 W.

Hence, the power sources 1A and 1B generate in-phase outputs at an output ratio of 1 : 1, and the direction of a synthetic magnetic field generated by the power sources 1A and 1B is determined. In this case, as depicted in FIG. 11D, when power is supplied to the two power receivers 2A and 2B, for example, the power reception efficiency of the power receiver 2A is 8% and the power reception efficiency of the power receiver 2B is 60%.

To obtain a power of 2.5 W received by the power receiver 2A, when the power transferred by the power sources 1A and 1B is set to 31.3 W, the power received by the power receiver 2B becomes 31.3 x 0.6 ≈ 18.8 [W], which is more than 10 W that is the power requirement of the power receiver 2B.

In this case, in the present example of second processing, as depicted in FIG. 11E, the resonance condition of the power receiver 2B is intentionally shifted to adjust the received power. In other words, for example, the capacitance of the capacitor (e.g., the capacitor 212 in FIG. 5A) in the power receiver resonance coil (21aB) of the power receiver 2B is increased (or reduced) to make a shift from the resonance point to perform detuning until the received power reaches 10 W. Thus, for example, the output ratio between the power sources 1A and 1B is 1 : 1, the power received by the power receiver 2A is 2.5 W, the power received by the power receiver 2B is 10 W, and the overall power transfer efficiency is 45%.

FIG. 12A to FIG. 12I are diagrams for illustrating an example of third processing in the wireless power transfer control method of the present embodiment. As depicted in FIG. 12A, in the present example of third processing, two orthogonal power sources 1A and 1B and five power receivers 2A1 to 2A3, 2B1, and 2B2 are provided.

Each of the power receivers 2A1 to 2A3 represents a smartphone having a power requirement of 2.5 W and each of the power receivers 2B1 and 2B2 represents a tablet having a power requirement of 10 W. First, as depicted in FIG. 12B, a single-body transferred power $PT_{A1}$ to only the power receiver 2A1 is obtained.

In other words, the resonance systems of the power receivers 2A2 and 2A3 and the power receivers 2B1 and 2B2 are turned off and only the power receiver 2A1 is turned on to obtain a single-body transferred power $PT_{A1}$ of the power receiver 2A1. Specifically, when, for example, the power sources 1A and 1B generate in-phase outputs at an output ratio of 1 : 1, and the single-body power transfer efficiency $\eta_{A1}$ of the power receiver 2A1 is set to 20%, since the power requirement of the power receiver 2A1 is 2.5 W, the single-body transferred power $PT_{A1}$ of the power receiver 2A1 is $PT_{A1} = 2.5/0.2 = 12.5$ [W].

Next, as depicted in FIG. 12C, the resonance systems of the power receivers 2A1 and 2A3 and the power receivers 2B1 and 2B2 are turned off and only the power receiver 2A2 is turned on to obtain a single-body transferred power $PT_{A2}$ of the power receiver 2A2. Specifically, when, for example, the power source 1A is stopped and only the power source 1B is activated, the output ratio is set to 0 : 1, and the single-body power transfer efficiency $\eta_{A2}$ of the power receiver 2A2 is set to 90%. In this case, since the power requirement of the power receiver 2A2 is 2.5 W, the single-body transferred power $PT_{A2}$ of the power receiver 2A2 is $PT_{A2} = 2.5/0.9 \approx 2.8$ [W].

As depicted in FIG. 12D, the resonance systems of the power receivers 2A1 and 2A2 and the power receivers 2B1 and 2B2 are turned off and only the power receiver 2A3 is turned on to obtain a single-body transferred power $PT_{A3}$ of the power receiver 2A3. Specifically, when, for example, the power sources 1A and 1B generate reverse phase outputs at an output ratio of 1 : 1, and the single-body power transfer efficiency $\eta_{A3}$ of the power receiver 2A3 is set to 50%, since the power requirement of the power receiver 2A3 is 2.5 W, the single-body transferred power $PT_{A3}$ of the power receiver 2A3 is $PT_{A3} = 2.5/0.5 \approx 5.0$ [W].

As depicted in FIG. 12E, the resonance systems of the power receivers 2A1 to 2A3 and the power receiver 2B2 are turned off and only the power receiver 2B1 is turned on to obtain a single-body transferred power $PT_{B1}$ of the power receiver 2B1. Specifically, when, for example, the power sources 1A and 1B generate in-phase outputs at an output ratio of 1 : 1, and the single-body power transfer efficiency $\eta_{B1}$ of the power receiver 2B1 is set to 60%, since the power requirement of the power receiver 2B1 is 10 W, the single-body transferred power $PT_{B1}$ of the power receiver 2B1 is $PT_{B1} = 10/0.6 \approx 16.7$ [W].

As depicted in FIG. 12F, the resonance systems of the power receivers 2A1 to 2A3 and the power receiver 2B1 are turned off and only the power receiver 2B2 is turned on to obtain a single-body transferred power $PT_{B2}$ of the power receiver 2B2. Specifically, when, for example, the power sources 1A and 1B generate in-phase outputs at an output ratio of 1 : 1, and the single-body power transfer efficiency $\eta_{B2}$ of the power receiver 2B2 is set to 60%, since the power requirement of the power receiver 2B2 is 10 W, the single-body transferred power $PT_{B2}$ of the power receiver 2B2 is $PT_{B2} = 10/0.6 \approx 16.7$ [W].

Accordingly, both the power receivers 2B1 and 2B2 have a maximum single-body transferred power because $16.7 > 12.5 > 5 > 2.8$, and the maximum single-body transferred power PTix is nearly 16.7 W.

Hence, the power sources 1A and 1B generate in-phase outputs at an output ratio of 1 : 1, and the direction of a synthetic magnetic field generated by the power sources 1A and 1B is determined. In this case, the single-body transferred powers $PT_{B1}$ and $PT_{B2}$ of the power receivers 2B1 and 2B2 are nearly equal and 16.7 W, which is equal to or higher than a predetermined ratio (e.g., 90% = $\alpha$) to the maximum single-body transferred power PTix.

As depicted in FIG. 12G, the two power receivers 2B1 and 2B2 are grouped as a power receiver group and the power sources 1A and 1B are controlled to simultaneously transfer power to the two power receivers 2B1 and 2B2 included in the power receiver group. In this case, when, for example, the power reception efficiency of the power receivers 2B1 and 2B2 is 25%, the power received by the power receivers 2B1 and 2B2 may be set to 10 W by setting the power transferred by the power sources 1A and 1B to 40 W.

As depicted in FIG. 12H, when, for example, the power reception efficiency of the power receiver 2A1 is 5%, the power reception efficiency of the power receiver 2A2 is 30%, and the power reception efficiency of the power receiver 2A3 is 0%, the power received by the power receiver 2A1 is 2 W, the power received by the power receiver 2A2 is 12 W, and the power received by the power receiver 2A3 is 0 W.

In other words, the power received by the power receiver 2A2 is 12 W, which is more than a power requirement of 2.5 W, and detuning is therefore performed to reduce it to 2.5 W. Since the power reception efficiency of the power receiver 2A1 is 5% and an efficiency equal to or higher than a predetermined power reception efficiency (e.g., 10% = β) is not obtained, power supply is stopped by turning off the resonance system because of the shortage of power supply. Since the power received by the power receiver 2A3 is 0 W, power supply is stopped (power off).

Hence, as depicted in FIG. 12I, the power sources 1A and 1B generate in-phase outputs at an output ratio of 1 : 1, the power reception efficiency of the power receivers 2B1 and 2B2 is 30%, the power reception efficiency of the power receiver 2A1 is 5%, the power reception efficiency of the power receiver 2A2 is 7.5%, and the power received by the power receiver 2A3 is 0 W.

For example, even for power receivers which are not included in the power receiver group, a power receiver having a received power higher than the power requirement may be detuned. The power receiver group may be divided when an efficiency equal to or higher than a predetermined power reception efficiency (e.g., 10% = β) is not obtained upon simultaneous power transfer to the power receivers included in the power receiver group, as described earlier.

For example, when m power source coils (power sources) are provided, the power receiver group is divided by processing the m power source coils as m-dimensional vectors, wherein m is an integer of two or more. The m-dimensional vectors may be used to process phases from the m power source coils only in two directions: in-phase and reverse phase.

A vectorial angle is calculated as the angle that one arbitrary vector makes with another vector of the m-dimensional vectors. When the power receiver group is divided into n parts, a power receiver having a vectorial angle that falls within the range in which the angle gets narrower with an increase in n may be classified into the divided power receiver group, wherein n is an integer of two or more.

In other words, for a plurality of power receivers included in a power receiver group including a power receiver having the maximum single-body transferred power, the outputs of the power sources are controlled to obtain the same ratio as in the power requirement.

In doing this, when a predetermined efficiency (β) is not obtained for all the power receivers of the power receiver group, the power receiver group is divided into two parts and the same processing is performed, and when a predetermined efficiency is not obtained either even for all the power receivers of the divided group, the power receiver group is divided into three parts. Such processing may be repeated to divide the power receiver group until a predetermined efficiency is obtained.

FIG. 13 is a block diagram depicting one example of a wireless power transfer system of the present embodiment, and illustrates an example in which it includes two power sources 1A and 1B and two power receivers 2A and 2B. The power sources 1A and 1B have the same configuration and include wireless power transfer units 11A and 11B, high frequency power supply units 12A and 12B, power transfer control units 13A and 13B, and communication circuit units 14A and 14B, respectively, as depicted in FIG. 13.

The high frequency power supply units 12A and 12B generate high frequency power, correspond to, for example, the high frequency power supply unit 12 in FIG. 3 mentioned earlier, and have a unique power supply impedance. Examples of the high frequency power supply units 12A and 12B include a constant-voltage power supply with its output impedance matched to 50 Ω and an Hi-ZΩ power supply (constant-current power supply) having a high output impedance.

The power transfer control units 13A and 13B control the power transfer units 11A and 11B, and the communication circuit units 14A and 14B enable communication between each power source and the power receivers and may use, for example, a DSSS wireless LAN system based on IEEE 802.11b or Bluetooth (registered trademark).

The high frequency power supply units 12A and 12B receive power supplied from the external power supplies 10A and 10B, respectively, and the power transfer control units 13A and 13B receive signals from detection units SA and SB, respectively. The power sources 1A and 1B may serve as, for example, two power transfer units (11) provided in one power source 1, as a matter of course.

The wireless power transfer units 11A and 11B correspond to coils for magnetic field resonance and convert high frequency power supplied from the high frequency power supply units 12A and 12B into a magnetic field. The detection units SA and SB detect the relative positional relationship between the power sources 1A and 1B and the relative positional relationship between the power receivers 2A and 2B.

When, for example, the positional relationship between the power sources 1A and 1B is fixed (power source resonance coils (power source coils) 11a1 and 11a2 are fixed in an L shape), information to that effect is received by the power transfer control units 13A and 13B, and the power receivers 2A and 2B have the detection function, the detection units SA and SB may be omitted.

The above-mentioned wireless power transfer control method of the present embodiment may be implemented as, for example, a program executed by the power transfer control unit (a controller: a computer) 13A in the power source 1A that controls the entire wireless power transfer system.

The power receivers 2A and 2B have the same configuration and include wireless power reception units 21A and 21B, rectifier units (power reception circuit units) 22A and 22B, power reception control units 23A and 23B, communication circuit units 24A and 24B, and apparatus bodies (battery units) 25A and 25B, respectively.

The power reception control units 23A and 23B are used to control the power receivers 2A and 2B, and the communication circuit units 24A and 24B enable communication between each power source and the power receivers and use, for example, a wireless LAN system or Bluetooth (registered trademark), as described earlier.

The wireless power reception units 21A and 21B correspond to coils for magnetic field resonance and convert wirelessly transferred power into a current. The rectifier units 22A and 22B convert AC currents obtained from the wireless power reception units 21A and 21B into DC currents, which may thus be used in battery charging or in the apparatus bodies.

As described above, the power sources 1A and 1B and the power receivers 2A and 2B perform communication via their communication circuit units 14A, 14B, 24A, and 24B, respectively. At this time, for example, the power source 1A may even be used as a master (entire controller) so that the master (power source) 1A controls the other power source 1B and the power receivers 2A and 2B as slaves.

Switching between simultaneous power transfer and time-division power transfer, power distribution ratio adjustment in simultaneous power transfer, and the like are controlled by communication via the communication circuit units 14A and 14B of the power sources 1A and 1B and the communication circuit units 24A and 24B of the power receivers 2A and 2B.

Specifically, for example, Q values in the respective power receivers 2A and 2B are communicated to a master (e.g., the power source 1A) which controls wireless power transfer, via the communication circuit unit 14A of the power source 1A and the communication circuit units 24A and 24B of the power receivers 2A and 2B.

In simultaneous power supply, for example, the power distribution ratio is adjusted by shifting the capacitance ($C_A$) of the capacitor in the power receiver resonance coil (the power receiver coil) of the power receiver 2B from the resonance point via the communication circuit unit 14A of the power source 1A and the communication circuit unit 24B of the power receiver 2B. Specifically, the value of the capacitance of a capacitor 212 in the power receiver resonance coil 21a depicted in FIG. 5A mentioned earlier is controlled to adjust the power distribution ratio between the power receivers 2A and 2B.

In time-division power supply, for example, power receivers which perform wireless power supply are switched via the communication circuit unit 14A of the power source 1A and the communication circuit units 24A and 24B of the power receivers 2A and 2B.

Specifically, for example, a switch 213 in the power receiver resonance coil 21a depicted in FIG. 5A mentioned earlier is controlled to perform control to sequentially turn on only switches 213 of power receivers which perform wireless power supply. Alternatively, for example, a switch 213 in the power receiver resonance coil 21a depicted in FIG. 5B mentioned earlier is controlled to perform control to sequentially turn off only switches 213 of power receivers which perform wireless power supply.

Note that power transfer between the wireless power transfer units 11A and 11B and the wireless power reception unit 21A or 21B is not limited to that which uses magnetic field resonance, and a power transfer scheme which uses electric field resonance, or electromagnetic induction or electric field induction, for example, is also applicable.

FIG. 14A to FIG. 14D are flowcharts for illustrating one example of processing of the wireless power transfer control method of the present embodiment. First, when an example of processing of the wireless power transfer control method of the present embodiment is started, a power supply trigger is input on the power receiver side in step ST8 and communicated from the power receiver to the power source in step ST9, and the process advances to step ST1.

In step ST1, the power source receives the power supply trigger (a signal for requesting power supply) from the power receiver, and the process advances to step ST2, in which the power receiver is searched. In other words, on the power receiver side, each power receiver receives a power receiver search signal from the power source and sends a response (communicates information 1) to the power source in step ST10. This information 1 includes information such as the power requirement required by each power receiver, and the position and posture of this power receiver.

On the power source side, in step ST3, information 1 from the power receiver is confirmed and the process advances to step 4, in which a single-body efficiency (a single-body power transfer efficiency) $\eta i$ of each power receiver Ri is calculated using information 1. This is, for example, sequentially performed for all power receivers Ri by turning on only the power receiver resonance coil (the resonance system) of a power receiver whose $\eta$ is to be obtained and turning off the resonance systems of the remaining power receivers, as described earlier.

The process advances to step 5, in which a single-body transferred power PTi is calculated from the single-body efficiency $\eta i$ and a power requirement (a single-body power requirement) PRi of each power receiver Ri. In other words, as described earlier, a single-body transferred power PTi of each power receiver Ri is calculated from PTi = PRi/$\eta i$ and the process advances to step ST6, in which a power receiver (a first power receiver) Rix having a maximum single-body transferred power PTix at which PTi is maximum is selected.

The process advances to step ST7, in which a power receiver Ri having a single-body transferred power PTi equal to or higher than a predetermined ratio $\alpha$, (e.g., 90%) to the maximum single-body transferred power PTix is selected and the process advances to step ST11.

In step ST11, it is determined whether a power receiver Ri having PTi which satisfies PTix·$\alpha \le$ PTi (e.g., PTix × 0.9 ≤ PTi) is present. When it is determined in step ST11 that at least one power receiver Ri which satisfies PTix·α ≤ PTi is present (NO), the process advances to step ST25 (a branch BB); or when it is determined in step ST11 that no such power receiver Ri is present (YES), the process advances to step ST12.

In step ST12, an optimum magnetic field is determined for the power receiver (the first power receiver) Rix having the maximum single-body transferred power PTix. Thus, the intensity ratio and phase of the output from each power source are settled and only the absolute value of this output is unsettled.

The process advances to step ST13, in which an efficiency (a single-body power transfer efficiency) ηi of each power receiver Ri is calculated using information 1 and the process advances to step ST14, in which it is determined whether the power reception efficiencies ηip of all power receivers are equal to or higher than a predetermined ratio (e.g., 10% = β).

When it is determined in step ST14 that the power reception efficiencies ηip of all power receivers are equal to or higher than a predetermined ratio (ηip ≥ β), the process advances to step ST18, in which a power transfer output P that allows the power receiver (the first power receiver) Rix to obtain a power requirement under the simultaneous power supply condition is determined and the process advances to step ST19.

In step ST19, in each power receiver, it is determined whether the power requirement PRi of each power receiver is equal to or higher than an actually supplied power (P·ηip). When it is determined in step ST19 that PRi ≥ P·ηip, i.e., excess power supply does not occur for all power receivers Ri, the process advances to step ST20, in which power transfer is started at the power transfer output P.

When it is determined in step ST19 that PRi ≥ P·ηip is not satisfied for all power receivers Ri, i.e., excess power supply occurs in at least one power receiver (Rid), the process advances to step ST21.

In step ST21, in each power receiver Rdi which satisfies PRi < P·ηip, a detuning condition which satisfies PRi = P·ηip' is calculated and communicated to each power receiver Rdi, and the process advances to step ST22.

In step ST22, under the simultaneous power supply condition and detuning, a power transfer output P' that allows the power receiver Rix to obtain a power requirement is determined and the process advances to step ST23, in which power supply is started at the power transfer output P'.

On the power receiver (Rdi) side, in step ST24, detuning is performed on the basis of the detuning condition calculated in step ST21. This detuning in the power receiver Rdi is equivalent to, for example, the detuning processing of the power receiver 2A2 described with reference to FIG. 12H.

When it is determined in step ST14 that the power reception efficiencies ηip of all power receivers are not equal to or higher than a predetermined ratio (ηip ≥ β), i.e., at least one power receiver has a power reception efficiency ηip lower than the predetermined ratio ηip < β), the process advances to step ST15.

In step ST15, a power receiver Rin which satisfies ηip ≥ β is selected, an instruction to turn off resonance of the power receiver Rin is output, and the process advances to step ST16. On the power receiver (Rin) side, in step ST17, the power receiver resonance coil (the resonance system) of the power receiver Rin is turned off on the basis of the instruction issued in step ST15. This turn-off of the resonance system in the power receiver Rin is equivalent to, for example, the processing for stopping power supply by turning off the resonance system of the power receiver 2A1 described with reference to FIG. 12H.

In step ST16, for power receivers Ri other than the power receiver Rin that satisfies ηip ≥ β, the power reception efficiency ηip of each power receiver Ri is calculated using information 1 and the process advances to step ST18, in which the same processing as described above is performed.

As described earlier, when it is determined in step ST11 that at least one power receiver Ri satisfies PTix·α ≤ PTi (NO), the process advances to step ST25 (the branch BB). In step ST25, a magnetic field which may maintain a given ratio of PRi to a plurality of values of Rix' satisfying PTix·α ≤ PTi is calculated.

Since power receivers (a power receiver group) Rix' which satisfy PTix·α ≤ PTi include the power receiver (the first power receiver) Rix having the maximum single-body transferred power PTix, a plurality of (at least two) values of Rix' are given.

The process advances to step ST26, in which in each power receiver Rix', it is determined whether the single-body power transfer efficiencies (efficiencies) ηix' of all power receivers are equal to or higher than a predetermined value (y), and when it is determined that all power receivers satisfy ηix' ≥ γ, the process advances to step ST27.

In step ST27, as in above-mentioned step ST12, since the intensity ratio and phase of the output from each power source are settled and only the absolute value of this output is unsettled, the process advances to step ST13 (a confluence CC), in which the same processing as described above is performed.

When it is determined in step ST26 that at least one power receiver satisfies ηix' < γ, the process advances to step ST28, in which the power receiver group Rix' is divided and the process advances to step ST29, in which a power receiver Ri for simultaneous power supply is newly set as Rix' and the process advances to step ST27.

The dividing processing of the power receiver group Rix' and the processing described with reference to the flowcharts depicted in FIG. 14A to FIG. 14D are merely examples, and various modifications and changes may be made to these types of processing, as a matter of course.

Although one or two power sources and power receivers are mainly used in the above description, larger numbers of power sources and power receivers may be used. Further, although power transfer which mainly uses magnetic field resonance has been taken as an example in the description of each embodiment, the present embodiment is also applicable to power transfer which uses electric field resonance.

All examples and conditional language recited herein are intended for pedagogical purposes to aid the reader in understanding the invention and the concepts contributed by the inventor to furthering the art.

Further, the above examples and conditional language are to be construed as being without limitation to such specifically recited examples and conditions, nor does the organization of such examples in the specification relate to a showing of the superiority and inferiority of the invention.

Although the embodiments of the present invention have been described in detail, it should be understood that the various changes, substitutions, and alterations could be made hereto without departing from the spirit and scope of the invention.

REFERENCE SIGNS LIST

> 1 Power source (primary side: power source side)
> 1A, 1B Power source
> 2 Power receiver (secondary side: power receiver side)
> 2A, 2B, 2A1 - 2A3, 2B1, 2B2, 2C1, 2C2 Power receiver
> 10A, 10B External power supply
> 11, 11A, 11B Wireless power transfer unit
> 11a, 11aA, 11aB, 11a1, 11a2 Power source resonance coil (power source coil: second coil: LC resonator)
> 11b Power supply coil (first coil)
> 12, 12A, 12B High frequency power supply unit
> 13, 13B Power transfer control unit
> 13A Power transfer control unit (controller)
> 14, 14A, 14B Communication circuit unit (first communication circuit unit)
> 21, 21A, 21B Wireless power reception unit
> 21a, 21aA, 21aB Power receiver resonance coil (power receiver coil: third coil: LC resonator)
> 21b Power extraction coil (fourth coil)
> 22, 22A, 22B Power reception circuit unit (rectifier unit)
> 23, 23A, 23B Power reception control unit
> 24, 24A, 24B Communication circuit unit (second communication circuit unit)
> 25, 25A, 25B Battery unit (apparatus body, load)

**Claims**

1. A wireless power transfer control method for a system including a plurality of power source coils and a plurality of power receivers and simultaneously, wirelessly transfers power from the plurality of power source coils to at least two of the power receivers using one of magnetic field resonance and electric field resonance, wherein the wireless power transfer control method comprises:

> obtaining a single-body power transfer efficiency of the plurality of power source coils to each of the power receivers, and a single-body power requirement required by each of the power receivers;
> dividing the single-body power requirement by the single-body power transfer efficiency to calculate a single-body transferred power of each of the power receivers;
> selecting a first power receiver having a maximum single-body transferred power at which the single-body transferred power is maximum; and
> controlling the plurality of power source coils to maximize a power transfer efficiency to the first power receiver.

2. A wireless power transfer control method for a system including a plurality of power source coils and a plurality of power receivers and wirelessly transfers power from the plurality of power source coils to each of the power receivers using one of magnetic field resonance and electric field resonance, wherein the wireless power transfer control method comprises:

> first power transfer for transferring power to only a specific power receiver on the basis of a power transfer efficiency of each of the power receivers;
> second power transfer for controlling the plurality of power source coils to change a direction of one of a magnetic field and an electric field, and transferring power to the power receivers;
> third power transfer for, in at least two of the power receivers which receive power, reducing a power received by at least one power receiver while maintaining an overall power transfer efficiency, and transferring power to the at least two of the power receivers; and
> fourth power transfer for, in the plurality of power receivers, transferring power on the basis of a first power receiver having a maximum single-body transferred power at which a single-body transferred power of each of the power receivers is maximum, wherein
>
> > the first power transfer, the second power transfer, the third power transfer, and the fourth power transfer are controlled to transfer power to the plurality of power receivers.

3. The wireless power transfer control method according to claim 2, wherein
in the first power transfer, power is sequentially transferred to each of the power receivers by time-division switching,
in the second power transfer, currents and phases of the plurality of power source coils are controlled to change a direction of one of a magnetic field and an electric field to simultaneously transfer power to at least two of the power receivers, and
in the third power transfer, a resonance point of a power receiver resonance coil in the power receiver to be reduced in received power is shifted to simultaneously transfer power to the at least two of the power receivers.

4. The wireless power transfer control method according to claim 2 or 3, wherein
in the fourth power transfer,
a single-body power transfer efficiency of the plurality of power source coils to each of the power receivers, and a single-body power requirement required by each of the power receivers are obtained,
the single-body power requirement is divided by the single-body power transfer efficiency to calculate a single-body transferred power of each of the power receivers,
the first power receiver having a maximum single-body transferred power at which the single-body transferred power is maximum is selected, and
the plurality of power source coils are controlled to maximize a power transfer efficiency to the first power receiver.

5. The wireless power transfer control method according to any one of claims 1 to 4, wherein
when at least one power receiver has a single-body transferred power of not less than a predetermined ratio to the maximum single-body transferred power, the first power receiver and the power receiver having the single-body transferred power of not less than the predetermined ratio to the maximum single-body transferred power are grouped as a power receiver group, and
the plurality of power source coils are controlled to simultaneously transfer power to at least two power receivers comprised in the power receiver group.

6. The wireless power transfer control method according to claim 5, wherein
the power receiver group is divided when an efficiency of not less than a predetermined power reception efficiency is not obtained upon simultaneous power transfer to the at least two power receivers comprised in the power receiver group.

7. The wireless power transfer control method according to claim 6, wherein
when the power source coils comprise m power source coils, the power receiver group is divided by processing the m power source coils as m-dimensional vectors, wherein m is an integer of not less than two.

8. The wireless power transfer control method according to claim 7, wherein
the m-dimensional vectors are used to process phases from the m power source coils only for an in-phase relationship and a reverse phase relationship.

9. The wireless power transfer control method according to claim 8, wherein
a vectorial angle is calculated as an angle that one given vector makes with another vector of the m-dimensional vectors, and
when the power receiver group is divided into n parts, a power receiver having the vectorial angle that falls within a range in which an angle gets narrower with an increase in n is classified into the divided power receiver group, wherein n is an integer of not less than two.

10. The wireless power transfer control method according to claim 9, wherein
when the power receiver group is divided into n parts, a power receiver having the vectorial angle that falls within a range in which an angle obtained by dividing 90° by n is classified into the divided power receiver group.

11. The wireless power transfer control method according to any one of claims 1 to 10, wherein
for the plurality of power receivers to which power is transferred simultaneously, power receivers each having a received power higher than a power requirement required by the power receiver are controlled in received power by changing Q values of power receiver resonance systems of the power receivers.

12. The wireless power transfer control method according to any one of claims 1 to 10, wherein
for the plurality of power receivers to which power is transferred simultaneously, power receivers each having a received power lower than a predetermined value stop receiving power by turning off power receiver resonance systems of the power receivers.

13. A wireless power transfer system including a plurality of power source coils and a plurality of power receivers and wirelessly transfers power from the power source coils to each of the power receivers using one of magnetic field resonance and electric field resonance, wherein the wireless power transfer system comprises:

first power transfer for transferring power to only a specific power receiver on the basis of a power transfer efficiency of each of the power receivers;

second power transfer for controlling the plurality of power source coils to change a direction of one of a magnetic field and an electric field, and transferring power to the power receivers;

third power transfer for, in at least two of the power receivers which receive power, reducing a power received by at least one power receiver while maintaining an overall power transfer efficiency, and transferring power to the at least two of the power receivers; and

fourth power transfer for, in the plurality of power receivers, transferring power on the basis of a first power receiver having a maximum single-body transferred power at which a single-body transferred power of each of the power receivers is maximum, wherein

the first power transfer, the second power transfer, the third power transfer, and the fourth power transfer are controlled to transfer power to the plurality of power receivers.

14. The wireless power transfer system according to claim 13, wherein
in the first power transfer, power is sequentially transferred to each of the power receivers by time-division switching,
in the second power transfer, currents and phases of the plurality of power source coils are controlled to change a direction of one of a magnetic field and an electric field to simultaneously transfer power to at least two of the power receivers, and
in the third power transfer, a resonance point of a power receiver resonance coil in the power receiver to be reduced in received power is shifted to simultaneously transfer power to the at least two of the power receivers.

15. The wireless power transfer system according to claim 13 or 14, wherein
in the fourth power transfer,

a single-body power transfer efficiency of the plurality of power source coils to each of the power receivers, and a single-body power requirement required by each of the power receivers are obtained,
the single-body power requirement is divided by the single-body power transfer efficiency to calculate a single-body transferred power of each of the power receivers,
the first power receiver having a maximum single-body transferred power at which the single-body transferred power is maximum is selected, and
the plurality of power source coils are controlled to maximize a power transfer efficiency to the first power receiver.

16. A program for controlling a wireless power transfer system including a plurality of power source coils, a plurality of power receivers, and a controller which performs control to wirelessly transfer power from the power source coils to each of the power receivers using one of magnetic field resonance and electric field resonance, wherein
the program causing the controller to execute:

obtaining a single-body power transfer efficiency of the plurality of power source coils to each of the power receivers, and a single-body power requirement required by each of the power receivers;
dividing the single-body power requirement by the single-body power transfer efficiency to calculate a single-body transferred power of each of the power receivers;
specifying a first power receiver having a maximum single-body transferred power at which the single-body transferred power is maximum; and
controlling the plurality of power source coils to maximize a power transfer efficiency to the first power receiver.

FIG. 1A

FIG. 1B

# FIG. 2A

# FIG. 2B

# FIG. 3

**PRIMARY SIDE (POWER SOURCE SIDE)** 1

ELECTROMAGNETIC INDUCTION

11 — 11a LC RESONATOR — 11b

12

ELECTROMAGNETIC INDUCTION

MAGNETIC FIELD RESONANCE (ELECTRIC FIELD RESONANCE)

POWER TRANSFER CONTROL UNIT 13

COMMUNICATION CIRCUIT UNIT 14

SHORT-DISTANCE COMMUNICATION

**PSECONDARY SIDE (POWER RECEIVER SIDE)** 2

21 — 21a LC RESONATOR — 21b

POWER RECEPTION CIRCUIT UNIT 22

BATTERY UNIT 25

POWER RECEPTION CONTROL UNIT 23

COMMUNICATION CIRCUIT UNIT 24

# FIG. 4A

[EXAMPLE OF THREE-COIL STRUCTURE]

11

21

12

11b

11a

21a

POWER RECEPTION CIRCUIT UNIT

22

BATTERY UNIT

25

EP 3 151 376 A1

FIG. 4B

[EXAMPLE OF THREE
-COIL STRUCTURE]

POWER
RECEPTION
CIRCUIT
UNIT
22

BATTERY
UNIT
25

EP 3 151 376 A1

FIG. 4C

[EXAMPLE OF TWO
-COIL STRUCTURE]

12

11
11a

21
21a

POWER
RECEPTION
CIRCUIT
UNIT
22

BATTERY
UNIT
25

# FIG. 5A

# FIG. 5B

## FIG. 5C

## FIG. 5D

# FIG. 6A

# FIG. 6B

## FIG. 6C

21a

211

L

212

C

213

ORDINARILY
ON

R

214

(TO POWER
RECEPTION
CIRCUIT
UNIT 22)

## FIG. 6D

21a

211

L

212

C

213

ORDINARILY
ON

C'

215

(TO POWER
RECEPTION
CIRCUIT
UNIT 22)

# FIG. 7A

2(21a)

1A(11aA)

1B(11aB)

# FIG. 7B

[IN-PHASE OUTPUT]

1A(11aA)

2(21a)

1B(11aB)

## FIG. 7C

[REVERSE PHASE OUTPUT]

1A(11aA)

2(21a)

1B(11aB)

## FIG. 8A

2A

2B

1A

# FIG. 8B

2A (21aA)

1A (11a)

$$f_0 = \frac{1}{2\pi\sqrt{L_0 C_0}}$$

$L_0$   $C_0$

$L_A$   $C_A$

$$f_A = \frac{1}{2\pi\sqrt{L_A C_A}}$$

2B (21aB)

$L_B$   $C_B$

$$f_B = \frac{1}{2\pi\sqrt{L_B C_B}}$$

# FIG. 8C

MA

CAPACITANCE OF CAPACITOR
$C_A$ OF POWER RECEIVER 2A
IS SHIFTED FROM
RESONANCE POINT

PP0

$$L_0 C_0 = L_A C_A = L_B C_B$$

# FIG. 9A

FIG. 9B

2A

CMF

1A

2B

1B

FIG. 10A

2A

11aA (1A)

2B

11aB (1B)

## FIG. 10B

$PT_A = 2.5 \div 0.6 \fallingdotseq 1.6$ [W]

2A

1A

1B

## FIG. 10C

$PT_B = 10 \div 0.6 = 16.7$ [W]

1A

2B

1B

## FIG. 10D

1A

2A

2B

1B

## FIG. 10E

1A

2A (1.6W)

2B (10w)

1B

# FIG. 11A

1A (11aA)

2A

2B

1B (11aB)

# FIG. 11B

2A

$PT_A = 2.5 \div 0.1 = 25 [W]$

1A

1B

## FIG. 11C

$PT_B = 10 \div 0.8 = 12.5 [W]$

## FIG. 11D

## FIG. 11E

1A
2A (2. 5W)
2B (18. 8W→10W)
1B

## FIG. 12A

1A
2B1
2A1
2B2
2A3
2A2
1B

## FIG. 12B

1A

2A1

$PT_{A1}=2.5\div0.2=12.5\,[W]$

1B

## FIG. 12C

1A

2A2

$PT_{A2}=2.5\div0.9\fallingdotseq2.8\,[W]$

1B

# FIG. 12D

1A

2A3

$PT_{A3}=2.5 \div 0.5=5[W]$

1B

# FIG. 12E

2B1

$PT_{B1}=10 \div 0.6 \fallingdotseq 16.7[W]$

1A

1B

FIG. 12F

$PT_{B2}=10 \div 0.6 \fallingdotseq 16.7[W]$

1A

2B2

1B

FIG. 12G

2A1

2B1

1A

2A3

2B2

2A2

1B

EP 3 151 376 A1

## FIG. 12H

## FIG. 12I

42

# FIG. 13

EP 3 151 376 A1

# FIG. 14A

[POWER SOURCE]

[POWER RECEIVER]

ST8 — INPUT POWER SUPPLY TRIGGER IN

↓

ST1 — RECEIVE TRIGGER IN ← COMMUNICATE POWER SUPPLY TRIGGER IN TO POWER SOURCE — ST9

↓

ST2 — SEARCH POWER RECEIVER

SEND RESPONSE (COMMUNICATE INFORMATION 1) TO POWER SOURCE — ST10

↓

ST3 — CONFIRM POWER RECEIVER INFORMATION 1

↓

CALCULATE SINGLE-BODY EFFICIENCY $\eta i$ OF EACH POWER RECEIVER $Ri$ USING INFORMATION 1 — ST4

↓

CALCULATE SINGLE-BODY TRANSFERRED POWER $PTi$ FROM SINGLE-BODY EFFICIENCY $\eta i$ AND POWER REQUIREMENT $PRi$ OF EACH POWER RECEIVER $Ri$ — ST5

↓

SELECT POWER RECEIVER $Rix$ HAVING MAXIMUM SINGLE-BODY TRANSFERRED POWER $PTix$ — ST6

↓

COMPARE MAXIMUM SINGLE-BODY TRANSFERRED POWER $PTix$ AND EACH VALUE OF $PTi$ WITH EACH OTHER TO SELECT $Ri$ WHICH SATISFIES $PTix \cdot \alpha \leq PTi$ — ST7

↓

( AA )

# FIG. 14B

[POWER SOURCE]                                      [POWER RECEIVER]

```
        ( AA )
           │
           ▼                          ST11
      ╱─────────────╲
     ╱   IS Ri WHICH  ╲      NO
    ╱ SATISFIES PTix・α≤PTi ╲──────────
    ╲     ABSENT?     ╱
     ╲               ╱
( CONFLUENCE ╲─────────╱            ( BRANCH )
    CC )         │                      BB )
                 │ YES
                 ▼
   ┌─────────────────────────┐
   │ DETERMINE MAGNETIC FIELD│
   │ OPTIMUM FOR Rix, AND NOTE THAT│
   │ INTENSITY RATIO AND PHASE OF│     ST12
   │ OUTPUT FROM EACH POWER SOURCE│
   │ ARE SETTLED(ONLY ABSOLUTE│
   │   VALUE OF THIS OUTPUT  │
   │     IS UNSETTLED)       │
   └─────────────────────────┘
                 │
                 ▼                          ST13
   ┌─────────────────────────────────┐
   │ CALCULATE EFFICIENCY ηip OF EACH POWER│
   │  RECEIVER Ri USING INFORMATION 1 │
   └─────────────────────────────────┘
                 │
   ST14          ▼
      ╱───────────────────╲
     ╱     DO ALL          ╲    NO
    ╱ EFFICIENCIES SATISFY   ╲──────────          ST15
    ╲     ηip≧β ?           ╱
     ╲                     ╱
      ╲───────────────────╱
           │ YES
```

SELECT Rin WHICH SATISFIES ηip<β AND ISSUE RESONANCE OFF INSTRUCTION

TURN OFF RESONANCE OF SELECTED Rin    ST17

FOR POWER RECEIVERS Ri OTHER THAN POWER RECEIVER Rin, CALCULATE EFFICIENCY ηip OF EACH POWER RECEIVER Ri USING INFORMATION 1    ST16

( DD )

# FIG. 14C

[POWER SOURCE]                                                    [POWER RECEIVER]

```
        ( DD )
          │
          ▼
┌─────────────────────────┐
│ DETERMINE POWER TRANSFER│
│  OUTPUT P THAT ALLOWS   │────── ST18
│   POWER RECEIVER Rix    │
│   TO OBTAIN POWER       │
│ REQUIREMENT UNDER       │
│ SIMULTANEOUS POWER      │
│   SUPPLY CONDITION      │
└─────────────────────────┘
          │
          ▼  ────── ST19
      ╱───────────╲
    ╱   IS PRi≥P·ηip ╲        NO
   ╱  SATISFIED IN EACH╲──────────────────┐
   ╲  POWER RECEIVER Ri?╱                  │
    ╲─────────────────╱                    │
          │ YES                            │ ────── ST21
          ▼                                ▼
┌──────────────────────┐    ┌─────────────────────────────┐
│ START POWER TRANSFER │    │ CALCULATE DETUNING CONDITION│
│ AT POWER TRANSFER    │    │ WHICH SATISFIES PRi=P·ηip'  │
│ OUTPUT P             │    │ IN EACH POWER RECEIVER Rid  │
└──────────────────────┘    │ WHICH SATISFIES PRi<P·ηip,  │
        ST20                │ AND COMMUNICATE CONDITION   │
                            │ TO EACH POWER RECEIVER      │
                            └─────────────────────────────┘
                                      │
                                      ▼
                            ┌─────────────────────────────┐     ┌──────────────────────┐
                            │ DETERMINE POWER TRANSFER    │     │ PERFORM DETUNING IN  │
                            │ OUTPUT P' THAT ALLOWS POWER │     │ ACCORDANCE WITH      │
                            │ RECEIVER Rix TO OBTAIN      │     │ POWER SOURCE         │
                            │ POWER REQUIREMENT UNDER     │     │ INSTRUCTION IN       │
                            │ BOTH SIMULTANEOUS POWER     │     │ POWER RECEIVER Rid   │
                 ST22 ──────│ SUPPLY CONDITION AND        │     └──────────────────────┘
                            │ DETUNING                    │              ST24
                            └─────────────────────────────┘
                                      │
                                      ▼                          ────── ST23
                            ┌─────────────────────────────────────┐
                            │ START POWER TRANSFER AT POWER       │
                            │ TRANSFER OUTPUT P'                  │
                            └─────────────────────────────────────┘
```

# FIG. 14D

[POWER SOURCE]                    [POWER RECEIVER]

$$\left(\text{BRANCH BB}\right)$$

CALCULATE MAGNETIC FIELD WHICH MAY MAINTAIN GIVEN RATIO OF $PR_i$ TO PLURALITY OF VALUES OF $R_{ix}'$ SATISFYING $PT_{ix} \cdot \alpha \leq PT_i$    — ST25

ST26 —
DO ALL EFFICIENCIES SATISFY $\eta_{ix}' \geq \gamma$ IN EACH POWER RECEIVER $R_{ix}$ ?

ST28 —
NO → DIVIDE $R_{ix}'$

NEWLY SET $R_i$ FOR SIMULTANEOUS POWER SUPPLY AS $R_{ix}'$ — ST29

YES

NOTE THAT INTENSITY RATIO AND PHASE OF OUTPUT FROM EACH POWER SOURCE ARE SETTLED (ONLY ABSOLUTE VALUE OF THIS OUTPUT IS UNSETTLED) — ST27

$$\left(\text{CONFLUENCE CC}\right)$$

## INTERNATIONAL SEARCH REPORT

| International application No. |
| --- |
| PCT/JP2014/063323 |

A. CLASSIFICATION OF SUBJECT MATTER
*H02J17/00*(2006.01)i, *H02J7/00*(2006.01)i

According to International Patent Classification (IPC) or to both national classification and IPC

B. FIELDS SEARCHED

Minimum documentation searched (classification system followed by classification symbols)
H02J17/00, H02J7/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2013/146929 A1 (Fujitsu Ltd.), 03 October 2013 (03.10.2013), entire text; all drawings (Family: none) | 1-6,11-16 |
| Y | JP 2009-268311 A (Sony Corp.), 12 November 2009 (12.11.2009), entire text; all drawings & US 2009/0271048 A1 | 1-6,11-16 |
| Y | JP 2012-517792 A (Qualcomm, Inc.), 02 August 2012 (02.08.2012), paragraphs [0115] to [0148]; fig. 24 to 27 & US 2010/0289341 A1 & WO 2010/093719 A1 & CN 102318212 A | 2-4,12-15 |

☒ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 July, 2014 (10.07.14) | 22 July, 2014 (22.07.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2014/063323 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-199975 A  (NEC Corp.),<br>06 October 2011 (06.10.2011),<br>entire text; all drawings<br>(Family: none) | 1-16 |
| A | JP 2013-055879 A  (LS Cable Ltd.),<br>21 March 2013 (21.03.2013),<br>entire text; all drawings<br>& US 2013/0057205 A1    & KR 10-2013-0026254 A<br>& CN 102983636 A | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005110399 A
- JP 2012034454 A
- JP 2013034367 A
- WO 2013035873 A

### Non-patent literature cited in the description

- **UCHIDA AKIYOSHI et al.** Phase and Intensity Control of Multiple Coil Currents in Resonant Magnetic Coupling. *IMWS-IWPT2012, THU-C-1,* 10 May 2012, 53-56
- **ISHIZAKI TOSHIO et al.** 3-D Free-Access WPT System for Charging Movable Terminals. *IMWS-IWPT2012, FRI-H-1,* 10 May 2012, 219-222